# EUROPEAN PATENT APPLICATION

(11) **EP 3 086 219 A1**
(43) Date of publication of application: **26.10.2016**
(21) Application number: 16163384.7
(22) Date of filing: 31.03.2016
(51) Int. Cl.: G06F 3/12

(54) **METHOD FOR PROVIDING CLOUD PRINTING SERVICE, AND APPARATUS AND SYSTEM FOR PERFORMING THE SAME**

(30) Priority: 23.04.2015 US 201562151730 P; 24.06.2015 KR 20150090114
(71) Applicant: Samsung Electronics Co., Ltd., Gyeonggi-do 16677 (KR)
(72) Inventor: HWANG, Ki-young, Gyeonggi-do (KR); PARK, Dong-chae, Gyeonggi-do (KR); PARK, Jeong-jin, Gyeonggi-do (KR)
(74) Representative: Taor, Simon Edward William

(57) **Abstract**

Provided is a method, performed by at least one server, includes receiving a sharing request from a mobile device, the sharing request indicating that a user of the mobile device requests to share at least one image forming apparatus that the user of the mobile device is authorized to use through the at least one server with at least one sharing user; determining, in accordance with the received sharing request, the at least one image forming apparatus; determining, in accordance with the received sharing request, the at least one sharing user; authorizing the determined at least one sharing user to use the determined at least one image forming apparatus through the at least one server; and transmitting information indicating the determined at least one image forming apparatus to at least one mobile device of the determined at least one sharing user, respectively.

## Description

The present disclosure relates to a cloud printing service, and more particularly, to a method for registering a device in order to use a cloud printing service or a method for providing an advertisement using a cloud printing service.

Recently, image forming apparatuses, such as printers, scanners, photocopiers, and multi-function products (MFPs), fundamentally have a communication function and thus can use a cloud printing service in communication with a server. In addition, due to the proliferation of mobile terminals capable of mobile communication, such as smartphones or tablets, a cloud printing service may be expanded in various ways by utilizing such mobile terminals.

Provided is a method for providing a cloud printing service and an apparatus and system for performing the same.

Additional aspects will be set forth in part in the description which follows and, in part, will be apparent from the description, or may be learned by practice of the presented exemplary embodiments.

According to an aspect of an exemplary embodiment, a method, performed by at least one server, includes receiving a sharing request from a mobile device, the sharing request indicating that a user of the mobile device requests to share at least one image forming apparatus that the user of the mobile device is authorized to use through the at least one server with at least one sharing user; determining, in accordance with the received sharing request, the at least one image forming apparatus; determining, in accordance with the received sharing request, the at least one sharing user; authorizing the determined at least one sharing user to use the determined at least one image forming apparatus through the at least one server; and transmitting information indicating the determined at least one image forming apparatus to at least one mobile device of the determined at least one sharing user, respectively.
According to an aspect of another exemplary embodiment, at least one server includes at least one memory storing computer-readable instructions; and at least one processor that executes the instructions to cause the following to be performed: receiving a sharing request from a mobile device, the sharing request indicating that a user of the mobile device requests to share at least one image forming apparatus that the user of the mobile device is authorized to use through the at least one server with at least one sharing user, determining, in accordance with the received sharing request, the at least one image forming apparatus, determining, in accordance with the received sharing request, the at least one sharing user, authorizing the determined at least one sharing user to use the determined at least one image forming apparatus through the at least one server, and transmitting information indicating the determined at least one image forming apparatus to at least one mobile device of the determined at least one sharing user, respectively.

These and/or other aspects will become apparent and more readily appreciated from the following description of exemplary embodiments, taken in conjunction with the accompanying drawings in which:
FIG. 1 is a diagram for describing a phone-number-based printing service according to an embodiment;
FIG. 2 is a diagram showing an image forming system 1 for providing a phone-number-based printing service according to an embodiment;
FIG. 3 is a block diagram showing a user device 10 of an image forming system 1 according to an embodiment;
FIG. 4 is a block diagram showing a cloud server 40 of an image forming system 1 according to an embodiment;
FIG. 5 is a block diagram showing an image forming apparatus 30 of an image forming system 1 according to an embodiment;
FIGS. 6A and 6B are diagrams for describing processes of mapping a phone number of a mobile device 13 of a second individual 23 to an image forming apparatus 31 and registering the phone number of the mobile device 13 in a cloud server 40 according to an embodiment;
FIG. 6C is a diagram for describing processes of mapping a phone number of a mobile device 13 of a second individual 23 to an image forming apparatus 31 and registering the phone number of the mobile device 13 in a cloud server 40 according to another embodiment;
FIG. 6D is a diagram for describing processes of mapping a phone number of a mobile device 13 of a second individual 23 to an image forming apparatus 31 and registering the phone number of the mobile device 13 in a cloud server 40 according to still another embodiment;
FIG. 6E illustrates user interface (UI) screens of a printing application executed in a mobile device 13 to register a phone number of a mobile device 13 in a cloud server 40 according to an embodiment;
FIG. 7 is a diagram showing an entire concept of a method of sharing an image forming apparatus registered in a cloud printing service with other users according to an embodiment;
FIGS. 8 and 9 are flowcharts for describing a method of sharing an image forming apparatus registered in a cloud printing service with other users according to an embodiment;
FIGS. 10A to 10C are diagrams showing UI screens displayed in a mobile terminal while the sharing of an image forming apparatus is set up according to an embodiment;
FIG. 11 is a diagram showing a process of setting up the sharing of an image forming apparatus according to an embodiment;
FIG. 12 is a diagram showing a UI screen displayed in a mobile terminal while the sharing of an image forming apparatus is cancelled according to an embodiment;
FIG. 13 is a diagram showing a process of cancelling the sharing of an image forming apparatus according to an embodiment;
FIG. 14 is a diagram showing an example of automatically providing a toner advertisement when printer toner is exhausted according to an embodiment;
FIG. 15 is a diagram showing an example of automatically ordering toner according to an automatic delivery program when printer toner is exhausted according to an embodiment;
FIG. 16 is a diagram for describing a method of providing an advertisement using a server infrastructure of a cloud printing service according to an embodiment;
FIG. 17 is a diagram showing a process of providing a toner advertisement when printer toner is exhausted according to an embodiment;
FIG. 18 is a flowchart for describing a method of providing a toner advertisement when printer toner is exhausted according to an embodiment;
FIG. 19 is a flowchart for describing a method of providing a toner advertisement or automatically ordering toner when printer toner is exhausted according to an embodiment;
FIGS. 20 to 22 are diagrams showing UI screens displayed on a screen of a mobile terminal in a phone number authentication process when an image forming apparatus is registered in a cloud server according to an embodiment;
FIG. 23 is a flowchart for describing a phone number authentication method performed when an image forming apparatus is registered in a cloud server according to an embodiment;
FIGS. 24 and 25 are diagrams showing a process of performing authentication when an image forming apparatus is registered in a cloud server according to an embodiment;
FIGS. 26A and 26B are diagrams showing UI screens that are displayed in an authentication process performed when a mobile terminal equipped with no SIM card is registered in a cloud printing service according to an embodiment;
FIG. 27 is a diagram showing an authentication process performed when a mobile terminal equipped with no SIM card is registered in a cloud printing service according to an embodiment;
FIG. 28 is a flowchart for describing an authentication process performed when a mobile terminal equipped with no SIM card is registered in a cloud printing service according to an embodiment;
FIG. 29 is a diagram for describing a method of registering an image forming apparatus in a cloud printing service on behalf of another user according to an embodiment;
FIG. 30 is a diagram showing a process of registering an image forming apparatus in a cloud printing service on behalf of another user according to an embodiment; and
FIG. 31 is a flowchart for describing a method of registering an image forming apparatus in a cloud printing service on behalf of another user according to an embodiment.

Hereinafter, embodiments of the present disclosure will be described in detail with reference to the accompanying drawings. In order to more clearly explain features of embodiments of the present disclosure, features well known to those skilled in the art will not be described in detail below. As used herein, the term "and/or" includes any and all combinations of one or more of the associated listed items. Expressions such as "at least one of," when preceding a list of elements, modify the entire list of elements and do not modify the individual elements of the list.

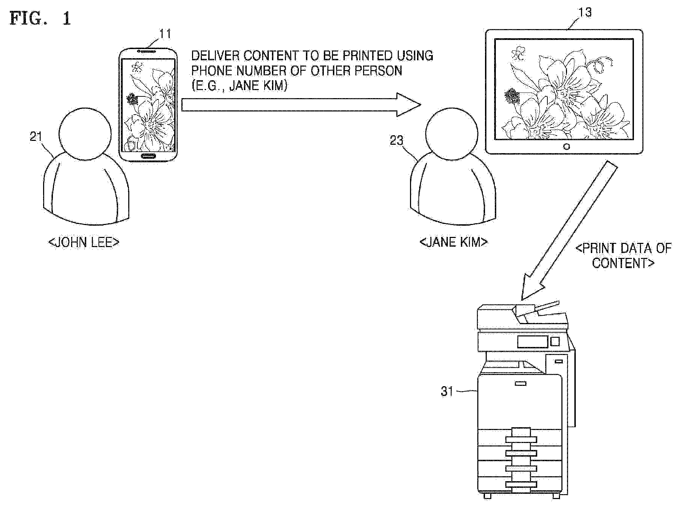

FIG. 1 is a diagram for describing a phone-number-based printing service according to an embodiment of the present disclosure.

Referring to FIG. 1, a first individual 21 (e.g., John Lee) may send content, such as an image or a document, stored in a mobile device 11 of the first individual 21 to a mobile device 13 of a second individual 23 (e.g., Jane Kim) so that the second individual 23 can print the content through an image forming apparatus 31.

Here, the content stored in the mobile device 11 of the first individual 21 is sent to the mobile device 13 of the second individual 23 based on a phone number of the mobile device 13 of the second individual 23.

The mobile devices 11 and 13 herein may be portable mobile devices or user devices having a mobile communication function, such as smartphones, tablet devices, or personal digital assistants (PDA), but are not limited thereto.

Such a portable mobile device having a mobile communication function is capable of a telephone call by using a well-known mobile communication technology, such as second generation (2G) mobile communication, third generation (3G) mobile communication, or fourth generation (4G) mobile communication.

In detail, one unique phone number is assigned to each portable mobile device, such as a smart phone, a tablet device, or a PDA, by a telecommunications company, and the portable mobile devices are distinguished from each other via the unique phone numbers.

Accordingly, one phone number is assigned to each of the mobile device 11 of the first individual 21 and the mobile device 13 of the second individual 23. In other words, the phone number may be a unique identification (ID) number of the mobile device 11 or 13.

Referring to FIG. 1, the first individual 21 may send content to the second individual 23 who will print the content by entering the phone number of the second individual 23 into the mobile device 11. Then, the second individual 23 may print the received content using the image forming apparatus 31.

An image forming system for providing a phone-number-based printing service according to an embodiment of the present disclosure will now be described in detail.

Meanwhile, the types of the mobile devices 11 and 13 used by the first and second individuals 21 and 23 are not limited in embodiments of the present disclosure, and the mobile devices 11 and 13 may be any devices as long as they are user devices to which phone numbers are assigned.

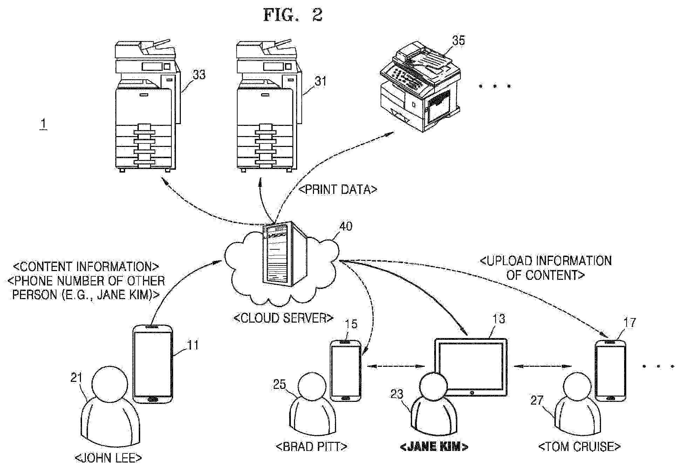

FIG. 2 is a diagram showing an image forming system 1 for providing a phone-number-based printing service according to an embodiment of the present disclosure.

Referring to FIG. 2, the image forming system 1 includes the mobile device 11 used by the first individual 21 (e.g., John Lee), the mobile device 13 used by the second individual 23 (e.g., Jane Kim), a mobile device 15 used by a third individual 25 (e.g., Brad Pitt), a mobile device 17 used by a fourth individual 27 (e.g., Tom Cruise), a plurality of image forming apparatuses 31, 33, and 35, and a cloud server 40.

Here, the number of individuals 21, 23, 25, and 27 and the number of image forming apparatuses 31, 33, and 35 included in the image forming system 1 are arbitrarily set for convenience of description. Embodiments of the present disclosure are not limited thereto.

Also, the names "John Lee," "Jane Kim," "Brad Pitt," and "Tom Cruise" of the first individual 21, the second individual 23, the third individual 25, and the fourth individual 27 herein are arbitrarily selected for convenience of description. Thus embodiments of the present disclosure are not limited thereto.

The first individual 21 ("John Lee") may send print data of the content by entering on the mobile device 11 a phone number of at least one person (e.g., the second individual 23 ("Jane Kim")) who will print the content. Also, the first individual 21 may send the print data of the content to another individual 25 or 27 by entering a phone number of the other individual 25 or 27 on the mobile device 11.

For example, it is assumed that the first individual 21 intends to transmit the print data of the content to the second individual 23 through the mobile device 11.

The first individual 21 selects content currently being used or stored in the mobile device 11 and then enters the phone number of the second individual 23 who will print the content on the mobile device 11.

Information about the content selected in the mobile device 11 and the phone number entered on the mobile device 11 are sent to the cloud server 40.

The cloud server 40 is a server for managing the phone numbers of the mobile devices 11, 13, 15, and 17. In more detail, the cloud server 40 may be a server for managing information about a mapping relationship between the phone numbers of the mobile devices 11, 13, 15, and 17 and the image forming apparatuses 31, 33, and 35 and information about a mapping relationship between the phone numbers of the mobile devices 11, 13, 15, and 17 and content sent from the mobile devices 11, 13, 15, and 17.

Also, the cloud server 40 may perform cloud rendering for rendering or converting content that is not in a print data format to a print data format.

When the phone number and content information of the second individual 23 are sent from the mobile device 11 of the first individual 21, the cloud server 40 renders or converts the received content to a print data format and transmits print data of the content to the mobile device 13 of the second individual 23 based on the phone number of the second individual 23 mapped to the content.

When the mobile device 13 of the second individual 23 receives the content information from the cloud server 40, the print data of the content may be printed by at least one of the image forming apparatuses 31, 33, and 35 designated (mapped) by the mobile device 13 of the second individual 23.

In detail, when the second individual 23 presets a direct printing mode (or a direct printing function) regarding the printing of the content in the mobile device 13, the print data of the content may be automatically printed by at least one of the image forming apparatuses 31, 33, and 35. Such a direct printing mode will be described in detail later.

Alternatively, when the second individual 23 presets a pull printing mode (or a pull printing function) regarding the printing of the content in the mobile device 13, the print data of the content is not automatically printed by at least one of the image forming apparatuses 31, 33, and 35, but may be held (may stand by) until a processing request is entered on the mobile device 13 by the second individual 23. In other words, unlike the direct printing mode, in the pull printing mode, the mobile device 13 displays the content information to the second individual 23, and processes the content when the second individual 23 enters the processing request.

Here, the second individual 23 may enter a print request for printing the content using the at least one of the image forming apparatuses 31, 33, and 35 designated (mapped) by the mobile device 13. Alternatively, the second individual 23 may enter a forward request for forwarding the content to the other individual 25 or 27 again. Alternatively, when the second individual 23 does not desire to print the content, the second individual 23 may enter a delete request for deleting the content information stored in the cloud server 40. Such a pull printing mode will be described in detail later.

Pull printing and direct printing will be described in detail later with reference to corresponding descriptions.

The cloud server 40 may previously manage information about the image forming apparatus 31 mapped to the mobile device 13 of the second individual 23. Accordingly, the cloud server 40 transmits the print data of the content transmitted to the mobile device 13 of the second individual 23 to the image forming apparatus 31 mapped to the mobile device 13. Then, the image forming apparatus 31 prints the content based on the print data of the content, and thus the content print request of the mobile device 11 of the first individual 21 is completed.

As another example, the same process may also be performed when the first individual 21 desires to send the print data of the content to the third or fourth individual 25 or 27 through the mobile device 11.

Meanwhile, the cloud server 40 may perform management such that only the image forming apparatus 31 is mapped to the mobile device 13 of the second individual 23. However, the other image forming apparatus 33 or 35 may be additionally mapped thereto.

Alternatively, even when none of the image forming apparatuses 31, 33, and 35 are currently mapped to the mobile device 13 of the second individual 23, registration information about a mapping relationship may be updated in the cloud server 40 by completing a registration process of the mobile devices 11, 13, 15, and 17 in one of the image forming apparatuses 31, 33, and 35 as described later.

Meanwhile, the mobile devices 11, 13, 15, and 17, the image forming apparatuses 31, 33, and 35, and the cloud server 40 in the image forming system 1 may be connected to each other through any one of currently well-known types of wired/wireless communication networks and mobile communication networks.

Referring back to FIG. 2, the image forming system 1 may transmit and receive content to be printed only using the phone numbers of the mobile devices 11, 13, 15, and 17 and may print content using the various image forming apparatuses 31, 33, and 35.

A printing platform of the image forming system 1 may be provided to an open application programmer interface (API) for an application developer, a webpage manufacturer, etc. Accordingly, the application developer or the webpage manufacturer may utilize the open API of the image forming system 1 to freely develop a print application executed in the mobile device 11, 13, 15, or 17 or the image forming apparatus 31, 33, or 35 on the basis of the printing platform.

Operations and functions of the components included in the image forming system 1 for providing a phone-number-based printing service will now be described in detail.

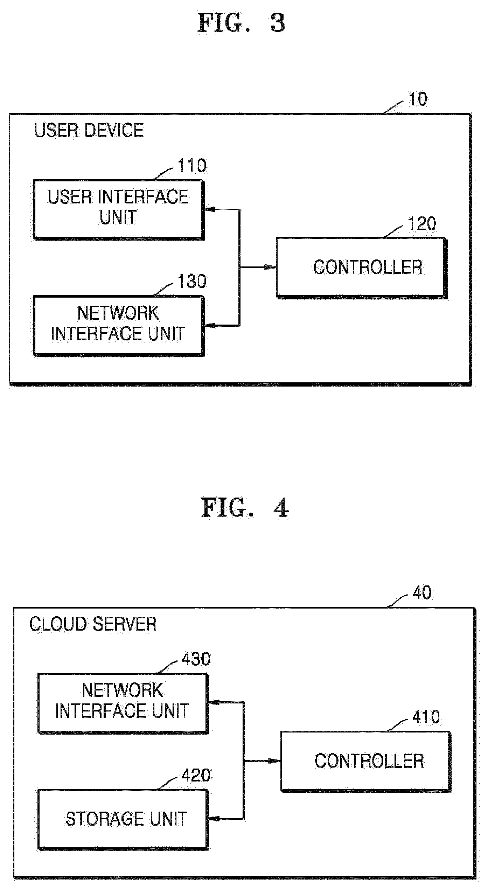

FIG. 3 is a block diagram showing a user device 10 of an image forming system 1 according to an embodiment of the present disclosure.

Referring to FIG. 3, the user device 10 may correspond to at least any one of the mobile devices 11, 13, 15, and 17 of the image forming system 1 of FIG. 2. In other words, the user device 10 may be the mobile device 11 that is a transmitter terminal for transmitting content to be printed or may be the mobile device 13, 15, or 17 that is a receiver terminal for receiving content to be printed. Alternatively, the user device 10 may be a computing device 19 with access to an embedded webpage provided by the image forming apparatus 31, 33, or 35.

The following description assumes that the mobile devices 11, 13, 15, and 17 include the components of the user device 10 of FIG. 3.

The user device 10 includes a user interface (UI) unit 110, a controller 120, and a network interface unit 130. Here, in order to prevent the gist of the present disclosure from being obscured, only hardware components related to an embodiment of the present disclosure are described in FIG. 3. However, it would be obvious to those skilled in the art that general-purpose hardware components other than those shown in FIG. 3 may be included in the user device 10.

The UI unit 110 is a hardware component including an input device or a display device, and displays information to a user of the user device 10 or receives information from the user. The UI unit 110 includes individual devices interfacing with the user, such as a display screen, a speaker, a keypad, a keyboard, and a mouse, and may also include a touch screen.

The user may use the UI unit 110 to select content to be transmitted from the user device 10 to the outside and printed or set a print option for the content, etc. Also, the user may enter a phone number that is an external transmission destination through the UI unit 110.

The controller 120 is a hardware component for controlling overall operations and functions of the user device 10. In detail, the controller 120 may execute a printing application for providing a phone-number-based printing service.

The controller 120 may be implemented as at least one processor, such as a central processing unit (CPU) and an application processor (AP).

The network interface unit 130 is a hardware component for supporting a wired or wireless communication function, and may support wireless communication, such as Wi-Fi, Wi-Fi Direct, near field communication (NFC), or Bluetooth, wired communication such as Ethernet, or 2G mobile communication, 3G mobile communication, or 4G mobile communication.

FIG. 4 is a block diagram showing a cloud server 40 of an image forming system 1 according to an embodiment of the present disclosure.

Referring to FIG. 4, the cloud server 40 may correspond to the cloud server 40 of the image forming system 1 of FIG. 2. The following description assumes that the cloud server 40 includes the components of the cloud server 40 of FIG. 4.

The cloud server 40 includes a controller 410, a storage unit 420, and a network interface unit 430. Here, in order to prevent the gist of the present disclosure from being obscured, only hardware components related to an embodiment of the present disclosure are described in FIG. 4. However, it would be obvious to those skilled in the art that general-purpose hardware components other than those shown in FIG. 4 may be included in the user device 10.

The controller 420 is a hardware component for controlling overall operations and functions of the cloud server 40. The controller 420 may manage and update mapping information of the phone numbers of the individuals 11, 13, 15, and 17 or may serve as a renderer for rendering or converting content.

The controller 420 may be implemented as at least one processor, such as a central processing unit (CPU) and an application processor (AP).

The storage unit 420 stores phone number registration information regarding a list of the phone numbers of the individuals 11, 13, 15, and 17, a list of content mapped to the phone numbers, and a list of the image forming apparatuses 31, 33, and 35 mapped to the phone numbers.

Also, the storage unit 420 stores print data of content rendered or converted to a print data format.

The network interface unit 430 is a hardware component for supporting a wired or wireless communication function, and may support wireless communication, such as Wi-Fi, Wi-Fi Direct, near field communication (NFC), or Bluetooth, wired communication such as Ethernet, or 2G mobile communication, 3G mobile communication, or 4G mobile communication.

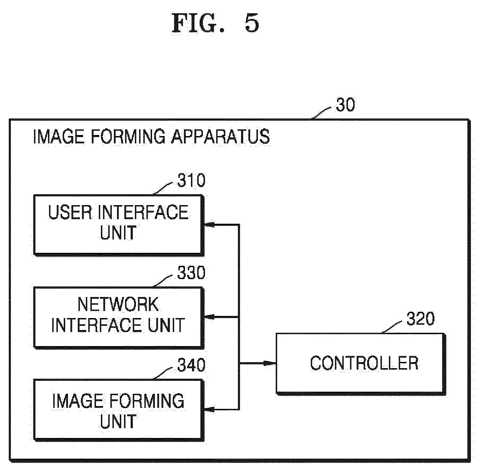

FIG. 5 is a block diagram showing an image forming apparatus 30 of an image forming system 1 according to an embodiment of the present disclosure.

Referring to FIG. 5, the image forming apparatus 30 may correspond to at least one of the image forming apparatuses 31, 33, and 35 of the image forming system 1 of FIG. 2. The following description assumes that the image forming apparatuses 31, 33, and 35 include the components of the image forming apparatus 30 of FIG. 5.

The image forming apparatus 30 includes a UI unit 310, a controller 320, a network interface unit 330, and an image forming unit 340. Here, in order to prevent the gist of the present disclosure from being obscured, only hardware components related to an embodiment of the present disclosure are described in FIG. 5. However, it would be obvious to those skilled in the art that general-purpose hardware components other than those shown in FIG. 5 may be included in the user device 10.

Here, a printing application providing a phone-number-based printing service, which has similar functions to the printing application of the mobile device 11 of the first individual 21 described above, may be previously installed on an operating system (OS) of the image forming apparatus 30. Alternatively, even if such a printing application is not previously installed in the image forming apparatus 30, a printing application may be newly installed on the OS of the image forming apparatus 30 by any individual 11, 13, 15, or 17 who desires to use the image forming apparatus 30.

The UI unit 310 is a hardware component including an input device or a display device, and displays information to a user of the image forming apparatus 30 or receives information from the user. The UI unit 310 includes individual devices interfacing with the user, such as a display screen, a speaker, and a keypad, and may also include a touch screen.

For example, through the UI unit 310, the user may select content to be scanned by the image forming apparatus 30 or may set a print option for the content, etc. Also, the user may enter a phone number that is an external destination to be transmitted through the UI unit 310.

The controller 320 is a hardware component for controlling overall operations and functions of the image forming apparatus 30. In detail, the controller 320 may execute a printing application for providing a phone-number-based printing service. Also, the controller 320 may control a print function, a copy function, or a scan function of the image forming unit 340.

The controller 320 may be implemented as at least one processor, such as a central processing unit (CPU) and an application processor (AP).

The network interface unit 330 is a hardware component for supporting a wired or wireless communication function, and may support wireless communication, such as Wi-Fi, Wi-Fi Direct, near field communication (NFC), or Bluetooth, wired communication such as Ethernet, or 2G mobile communication, 3G mobile communication, or 4G mobile communication.

The image forming unit 340 is a hardware component for performing print and copy functions for content or a scan function for a document.

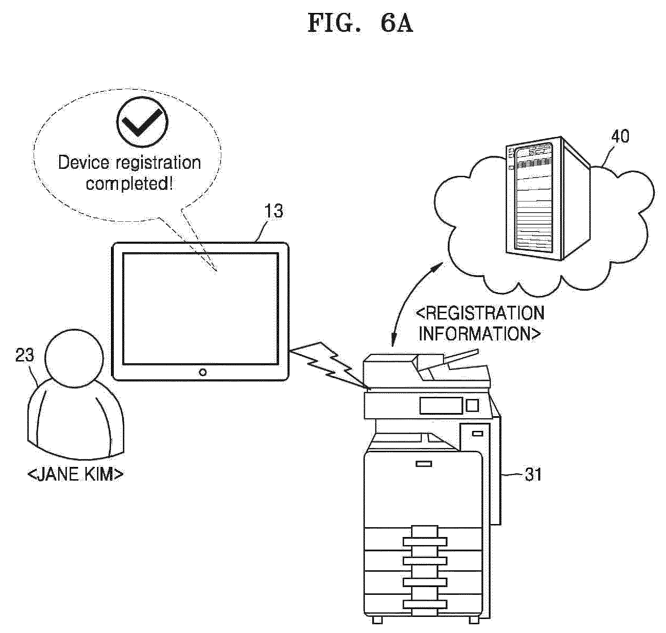

FIGS. 6A to 6E are diagrams for describing various methods of registering the image forming apparatus 31, 33, or 35 to print received content, which are performed by the mobile device 13, 15, or 17 of one of the second to fourth individuals 23, 25, or 27 (Jane Kim, Brad Pitt, or Tom Cruise), which corresponds to a receiver terminal in the image forming system 1 for providing a phone-number-based printing service according to an embodiment of the present disclosure.

FIGS. 6A to 6E are described mainly based on the mobile device 13 of the second individual 23 (Jane Kim) who is a recipient, but the details of FIGS. 6A to 6E may also be applied to the mobile device 15 or 17 of the third or fourth individual 25 or 27. In addition, since the mobile device 11 of the first individual 21 (John Lee) may also correspond to a receiver terminal if necessary, the mobile device 11 of the first individual 21 (John Lee) may also perform the registration process in methods to be described with reference to FIGS. 6A to 6E.

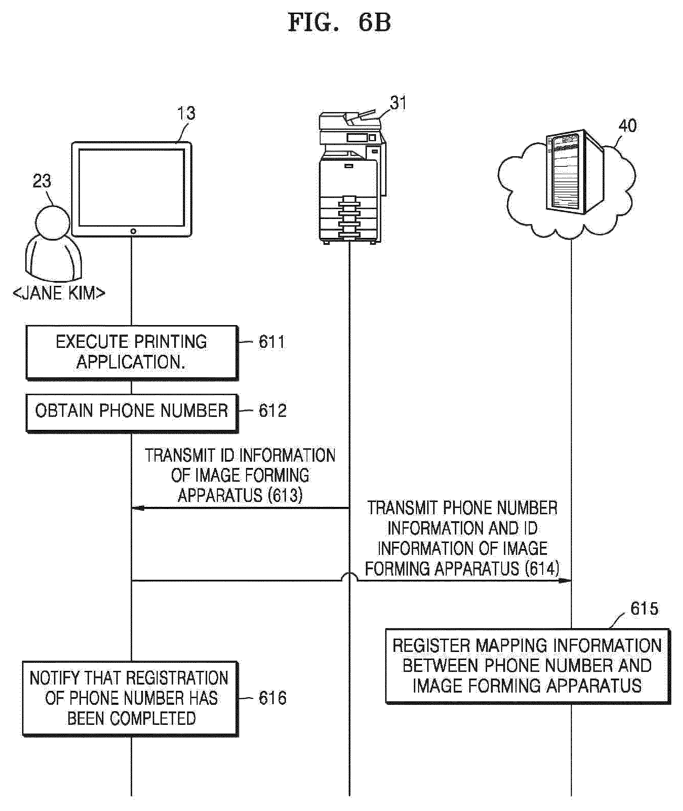

FIGS. 6A and 6B are diagrams for describing processes of mapping a phone number of a mobile device 13 of a second individual 23 to an image forming apparatus 31 and registering the phone number of the mobile device 13 in a cloud server 40 according to an embodiment of the present disclosure.

Referring to FIGS. 6A and 6B, in operation 611, the controller 120 of the mobile device 13 executes a printing application.

In operation 612, the controller 120 of the mobile device 13 obtains the phone number of the mobile device 13 through the executed printing application.

In operation 613, the network interface unit 130 of the mobile device 13 is connected wirelessly to the network interface unit 330 of the image forming apparatus 31 to receive ID information of the image forming apparatus 31.

Here, the ID information of the image forming apparatus 31 may include information about a network address, such as a media access control (MAC) address or an IP address, of the image forming apparatus 31 and information about a serial number and product specification of the image forming apparatus 31.

Here, the network interface unit 130 of the mobile device 13 and the network interface unit 330 of the image forming apparatus 31 may be connected to each other through a wireless network, such as Wi-Fi, Wi-Fi Direct, NFC, or Bluetooth.

For example, operation 613 may be performed by the mobile device 13 that is NFC-tagged to the image forming apparatus 31 by activating an NFC function.

In operation 614, the network interface unit 130 of the mobile device 11 is connected wirelessly to the network interface unit 430 of the cloud server 40 to transmit information about the phone number of the mobile device 13 and the ID information of the image forming apparatus 31 to the cloud server 40 as registration information of the mobile device 13.

In operation 615, the controller 410 of the cloud server 40 maps the phone number of the mobile device 13 and the ID information of the image forming apparatus 31 to each other and stores such mapping information in the storage unit 420 as the registration information of the mobile device 13.

In operation 616, the UI unit 110 of the mobile device 13 notifies that the registration of the phone number of the mobile device 13 in the image forming apparatus 31 has been completed.

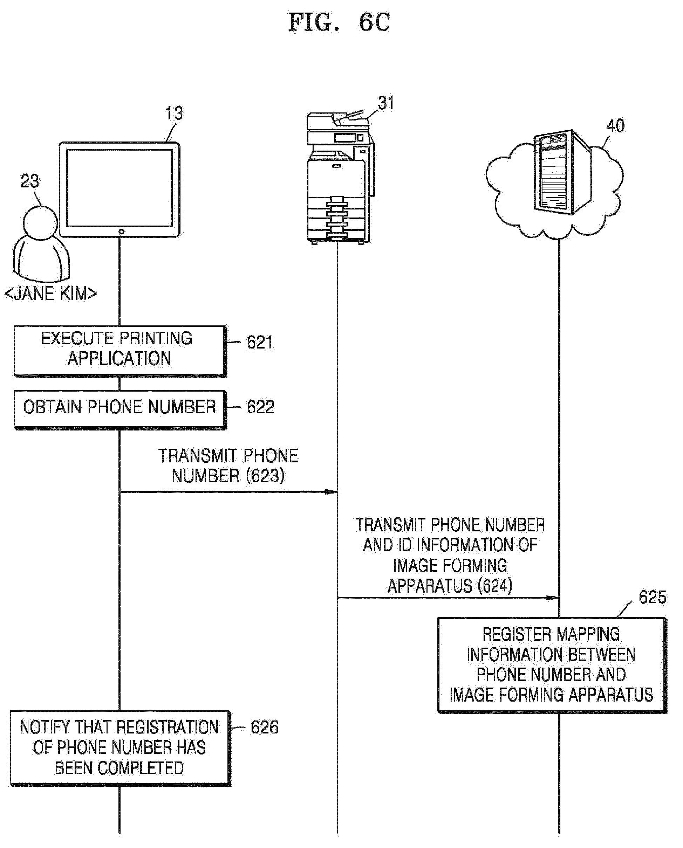

FIG. 6C is a diagram for describing processes of mapping a phone number of a mobile device 13 of a second individual 23 to an image forming apparatus 31 and registering the phone number of the mobile device 13 in a cloud server 40 according to another embodiment.

Referring to FIGS. 6A and 6C, the controller 120 of the mobile device 13 executes a printing application in operation 621.

In operation 622, the controller 120 of the mobile device 13 obtains the phone number of the mobile device 13 through the executed printing application.

In operation 623, the network interface unit 130 of the mobile device 13 is connected wirelessly to the network interface unit 330 of the image forming apparatus 31 to transmit information about the obtained phone number to the image forming apparatus 31.

For example, operation 623 may be performed by the mobile device 13 that is NFC-tagged to the image forming apparatus 31 by activating an NFC function.

In operation 624, the network interface unit 330 of the image forming apparatus 31 is connected wirelessly to the network interface unit 430 of the cloud server 40 to transmit the information about the phone number obtained from the mobile device 13 and the ID information of the image forming apparatus 31 to the cloud server 40 as the registration information of the mobile device 13.

Meanwhile, the image forming apparatus 31 may be connected to the cloud server 40 using an extensible messaging and presence protocol (XMPP), but is not limited thereto. Accordingly, the image forming apparatus 31 may be connected using another protocol.

In operation 625, the controller 410 of the cloud server 40 maps the phone number of the mobile device 13 and the ID information of the image forming apparatus 31 to each other, and stores such mapping information in the storage unit 420 as the registration information of the mobile device 13.

In operation 626, the UI unit 110 of the mobile device 13 notifies that the registration of the phone number of the mobile device 13 in the image forming apparatus 31 has been completed.

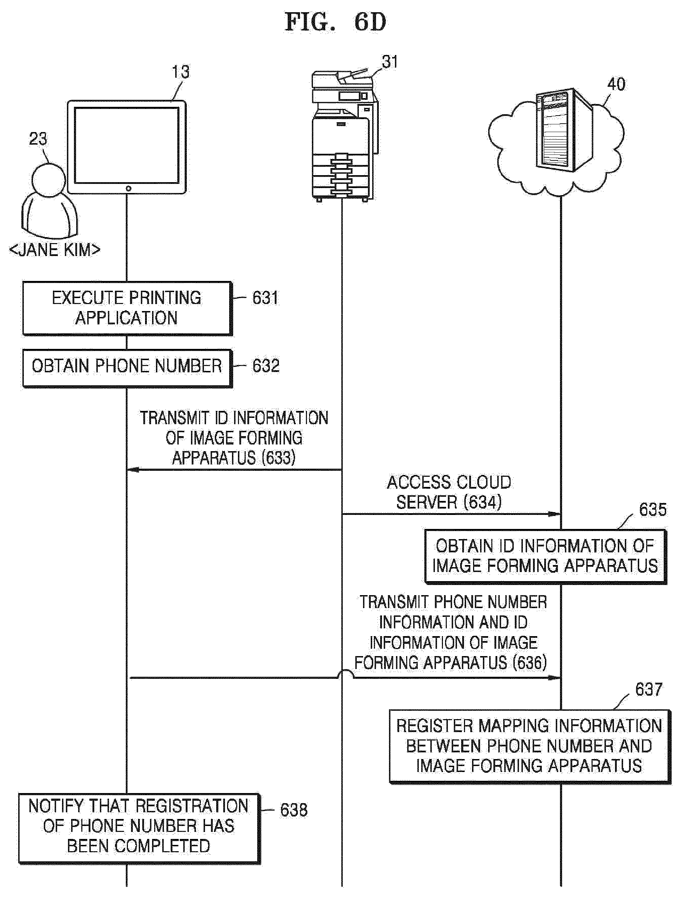

FIG. 6D is a diagram for describing processes of mapping the phone number of the mobile device 13 of the second individual 23 to the image forming apparatus 31 and registering the phone number of the mobile device 13 in the cloud server 40 according to another embodiment of the present disclosure.

Referring to FIGS. 6A and 6D, in operation 631, the controller 120 of the mobile device 13 executes a printing application.

In operation 632, the controller 120 of the mobile device 13 obtains the phone number of the mobile device 13 through the executed printing application.

In operation 633, the network interface unit 130 of the mobile device 13 is connected wirelessly to the network interface unit 330 of the image forming apparatus 31 to receive ID information of the image forming apparatus 31.

For example, operation 633 may be performed by the mobile device 13 that is NFC-tagged to the image forming apparatus 31 by activating an NFC function.

In operation 634, the network interface unit 330 of the image forming apparatus 31 accesses the cloud server 40. Operation 634 may be performed by an access command of the mobile device 13. Meanwhile, the image forming apparatus 31 may be connected to the cloud server 40 using an extensible messaging and presence protocol (XMPP), but is not limited thereto. Accordingly, the image forming apparatus 31 may be connected using another protocol.

In operation 635, the controller 410 of the cloud server 40 obtains the ID information of the image forming apparatus 31.

In operation 636, the network interface unit 130 of the mobile device 13 is connected wirelessly to the network interface unit 430 of the cloud server 40 to transmit the information about the phone number of the mobile device 13 and the ID information of the image forming apparatus 31 to the cloud server 40 as the registration information of the mobile device 13.

In operation 637, the controller 410 of the cloud server 40 maps the phone number of the mobile device 13 and the ID information of the image forming apparatus 31 to each other and stores such mapping information in the storage unit 420 as the registration information of the mobile device 13.

In operation 638, the UI unit 110 of the mobile device 13 notifies that the registration of the phone number of the mobile device 13 in the image forming apparatus 31 has been completed.

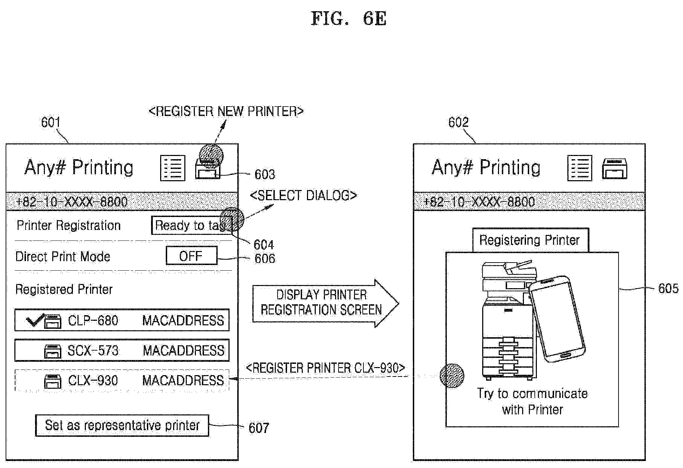

FIG. 6E illustrates user interface (UI) screens of a printing application executed in a mobile device 13 to register a phone number of a mobile device 13 in a cloud server 40 according to an embodiment of the present disclosure.

A printing application is previously installed in the mobile device 13.

When the second individual 23 desires to register the phone number of the mobile device 13 and the image forming apparatus 31 in the cloud server 40, the second individual 23 executes the printing application in the mobile device 13.

When the second individual 23 clicks a registration icon 603 to register a new printer while the printing application is being executed, a first screen 601 is displayed.

The first screen 601 may display an entry for requesting registration of the image forming apparatus 31, an entry for setting up a direct printing mode, and a list of image forming apparatuses registered to the phone number of the mobile device 13.

When the second individual 23 clicks a dialog 604 in the entry for requesting registration, a second screen 602 is displayed.

The second screen 602 is a screen for guiding the registration of the image forming apparatus 31. When the second screen 602 is displayed, the second individual 23 may complete the registration of the image forming apparatus 31 by establishing communication between the mobile device 13 and the image forming apparatus 31. Here, the communication between the mobile device 13 and the image forming apparatus 31 may be established by NFC-tagging the mobile device 13 to the image forming apparatus 31. Alternatively, the communication between the mobile device 13 and the image forming apparatus 31 may be established by connecting them via any wireless communication method, such as Wi-Fi or Wi-Fi Direct.

In other words, the mobile device 13 may register the information about the phone number of the mobile device 13 in the cloud server 40 through the first and second screens 601 and 602 of the previously installed printing application. Here, the first and second screens 601 and 602 of the printing application may be configured differently, but embodiments of the present disclosure are not limited thereto.

Meanwhile, the mobile device 13 may activate or deactivate a direct printing function through an icon 606 in the entry for setting up the direct printing mode of the printing application.

If the direct printing function is activated, the second individual 23 may designate the image forming apparatus 31 (e.g., CLP-680) to perform the direct printing mode by selecting the image forming apparatus 31 (e.g., CLP-680) from the list of image forming apparatuses and then clicking a setup button 607.

Meanwhile, information about the registration and direct printing mode performed by the printing application of the mobile device 13 may be transmitted to and stored in the cloud server 40.

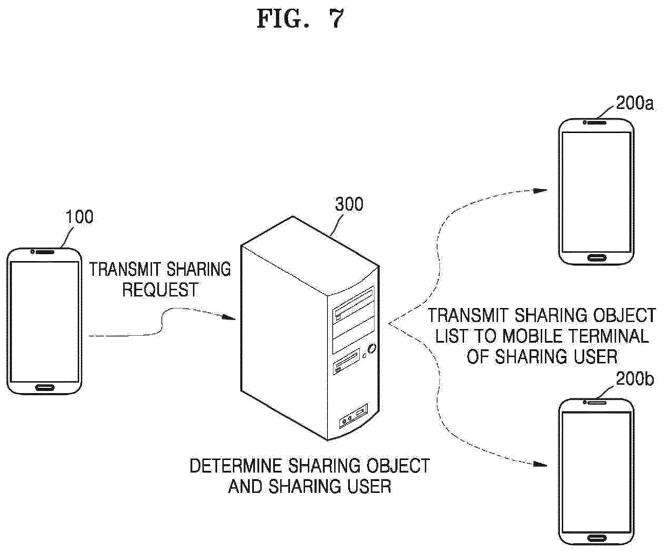

A method of sharing an image forming apparatus registered in a phone-number-based printing service, that is, a cloud printing service, with other users will be described below with reference to FIGS. 7 to 13.

As described above with reference to FIGS. 6A to 6E, the user may register an image forming apparatus such that the phone number of the user's mobile terminal corresponds to a server providing the cloud printing service. However, in the following description, the user who has already registered the image forming apparatus corresponding to the phone number of the user's mobile terminal may set the registered image forming apparatus to be shared with other users. That is, the user may set the registered image forming apparatus to be shared with another user registered as a friend.

In the description of an example of sharing the image forming apparatus with reference to FIGS. 7 to 13, a user who shares the image forming apparatus is called a "sharing provider" while a user with whom the image forming apparatus is shared is called a "sharing receiver" or "sharing user." Also, an image forming apparatus to be shared is called a "sharing object."

FIG. 7 is a diagram showing an entire concept of a method of sharing an image forming apparatus registered in a cloud printing service with other users according to an embodiment.

Referring to FIG. 7, when a mobile terminal 100 of the sharing provider transmits a sharing request to a cloud server 300, the cloud server 300 may determine a sharing object and sharing users and may transmit a list of image forming apparatuses included in the determined sharing object to mobile terminals 200a and 200b of the sharing users. Accordingly, the sharing users may check a shared image forming apparatus through the mobile terminals 200a and 200b. Meanwhile, the cloud server 300 may store corresponding information between the phone numbers of the sharing users and the image forming apparatuses included in the sharing object.

In detail, the sharing provider may execute a mobile app that supports a cloud printing service in the mobile terminal 100 of the sharing provider and may request the sharing of the image forming apparatus in the mobile app. In this case, it is assumed that at least one image forming apparatus is already registered to correspond to the phone number of the mobile terminal 100 of the sharing provider. When there is a sharing request from the mobile terminal 100, the sharing provider may designate a sharing object and a sharing user.

For example, the sharing provider may designate, as the sharing user, persons stored in a contact book of the mobile terminal 100 or some or all persons registered as friends in a mobile app. Also, the sharing provider may designate, as the sharing object, some or all of image forming apparatuses registered to correspond to the phone number of the mobile terminal 100. Also, the sharing provider may set a different sharing user for each sharing object or may set a different sharing object for each sharing user.

When the mobile terminal 100 of the sharing provider transmits a sharing request to the cloud server 300, the cloud server 300 may determine a sharing object and a sharing user. As described above, since the sharing provider designates the sharing object and the sharing user upon the sharing request, the cloud server 300 may receive information for determining the sharing object and the sharing user from the mobile terminal 100 upon reception of the sharing request and may determine the sharing object and the sharing user on the basis of the received information.

The cloud server 300 may store information corresponding to the determined sharing object and sharing user in an internal memory. That is, the cloud server 300 may store ID information of image forming apparatuses included in the sharing object in a table for defining a sharing relationship such that the ID information corresponds to phone numbers of mobile terminals 200a and 200b of sharing users.

When the cloud server 300 transmits a list of the image forming apparatuses included in the sharing object to the mobile terminals 200a and 200b of the sharing users, the mobile terminals 200a and 200b may display the received list of the image forming apparatuses on screens of the mobile terminals 200a and 200b as shared apparatuses.

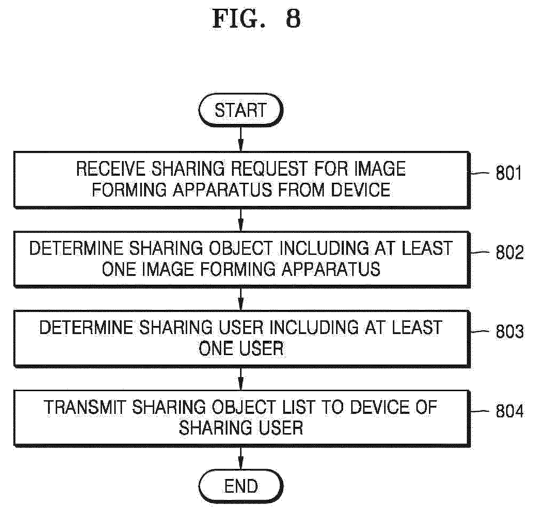

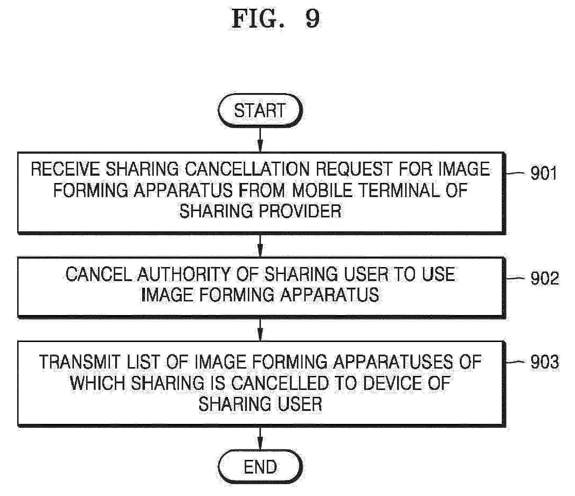

FIGS. 8 and 9 are flowcharts for describing a method of sharing an image forming apparatus registered in a cloud printing service with other users according to an embodiment. In detail, FIG. 8 is associated with a process of setting up sharing, and FIG. 9 is associated with a process of cancelling sharing.

Referring to FIG. 8, in operation 801, a cloud server receives a sharing request for an image forming apparatus from a device, that is, a mobile terminal of a sharing provider. Here, an image forming apparatus to be shared is an image forming apparatus that is previously registered in the cloud server such that the image forming apparatus corresponds to the phone number of the sharing provider.

In operation 802, the cloud server determines the sharing object including at least one image forming apparatus. When receiving the sharing request from the mobile terminal in operation 801, the cloud server may also receive information for determining the sharing object. That is, when the sharing provider selects an image forming apparatus from among the image forming apparatuses that are registered to correspond to the phone numbers of the sharing provider, the mobile terminal may transmit the selection information to the cloud server and the cloud server may use the received selection information to determine the image forming apparatus to be shared.

In operation 803, the cloud server determines a sharing user including at least one user. When receiving the sharing request from the mobile terminal in operation 801, the cloud server may also receive information for determining the sharing user. That is, when the sharing provider selects at least one user with whom the image forming apparatus is to be shared from among users included in a contact book of a mobile terminal or users registered in a mobile app as friends, the mobile terminal may transmit the selection information to the cloud server and the cloud server may use the received selection information to determine the users with whom the image forming apparatus is to be shared.

In operation 804, the cloud server may transmit a list of at least one image forming apparatus included in the sharing object to the mobile terminal of the determined sharing user. Accordingly, the sharing user may check a list of the shared image forming apparatus through the mobile terminal.

Referring to FIG. 9, in operation 901, a cloud server receives a sharing cancellation request from a mobile terminal of a sharing provider. When the sharing provider requests sharing cancellation of the image forming apparatus through the mobile terminal, the mobile terminal transmits the sharing cancellation request to the cloud server.

In operation 902, the cloud server cancels the authority of the sharing user to use the image forming apparatus according to the received sharing cancellation request. That is, the cloud server deletes information about the sharing object and sharing user requested to be cancelled from corresponding information between the sharing objects and sharing users stored in the cloud server.

In operation 903, the cloud server transmits a list of the image forming apparatuses of which the sharing is canceled to the mobile terminal of the sharing user. The mobile terminal of the sharing user deletes the image forming apparatus included in the received list from a sharing object list displayed on a screen.

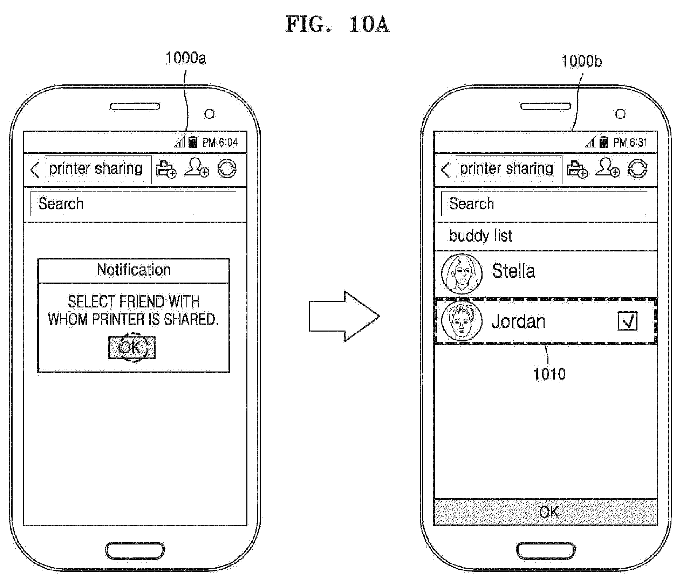

FIGS. 10A to 10C are diagrams showing UI screens displayed in a mobile terminal while the sharing of an image forming apparatus is set up according to an embodiment. However, the UI screens shown in FIGS. 10A to 10C are merely examples of a UI screen needed to share the image forming apparatus. Accordingly, it would be obvious to those skilled in the art that the UI screens may also be configured in various other forms.

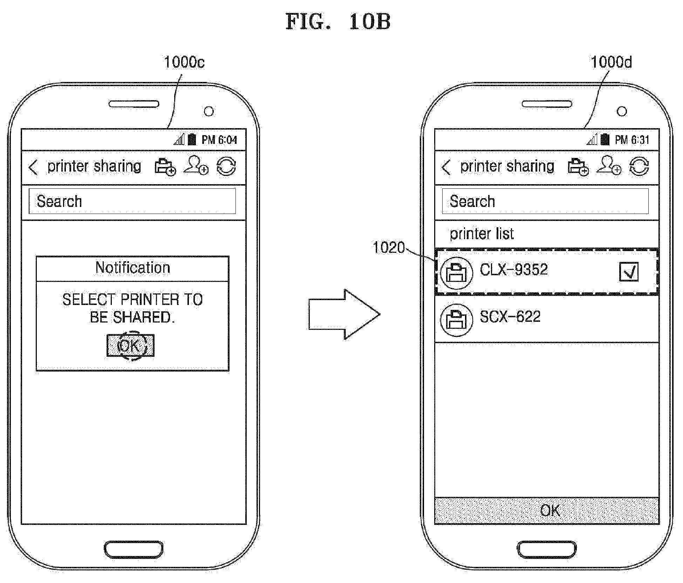

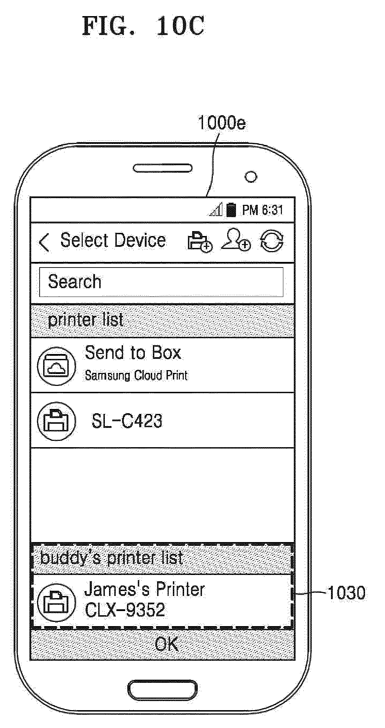

In particular, FIGS. 10A and 10B are UI screens displayed in a mobile terminal of a sharing provider, and FIG. 10C is a UI screen displayed in the mobile terminal of the sharing user.

Referring to FIG. 10A, a pop-up window for selection of the sharing user is displayed on a first UI screen 1000a displayed in the mobile terminal of the sharing provider. When the sharing provider selects "OK" from the pop-up, a second UI screen 1000b is displayed in the mobile terminal. A list of friends who have joined a cloud printing service is displayed on the second UI screen 1000b, and "Jordan" 1010 is selected from the displayed friend list as a user with whom the image forming apparatus is to be shared.

FIG. 10A shows an example in which the sharing provider selects sharing users from the friend list one by one. However, all users included in the friend list are considered as the sharing users without the selection process, the sharing users are selected from among the users included in the contact book, or all users included in the contact book are considered as the sharing users without the selection process.

Referring to FIG. 10B, a pop-up window that leads to selection of the sharing user is displayed on a third UI screen 1000c displayed in the mobile terminal of the sharing provider. When the sharing provider selects "OK" from the pop-up, a fourth UI screen 4000d is displayed in the mobile terminal. A list of printers registered in a cloud printing service is displayed on the fourth UI screen 1000d, and "CLX-9352" 1020 is selected from the displayed printer list as a printer to be shared.

FIG. 10C shows a fifth UI screen 1000e on which a mobile terminal of the sharing user, that is, "Jordan" selected in FIG. 10A, is displayed. A list 1030 of printers shared with friends is also displayed along with a list ("Send to my Box," "SL-C423") of printers that are registered in a cloud printing service such that the printers correspond to the phone number of the sharing user "Jordan." As shown, the name (James) of the sharing user is displayed in the list of the shared printers to identify whose printer is shared.

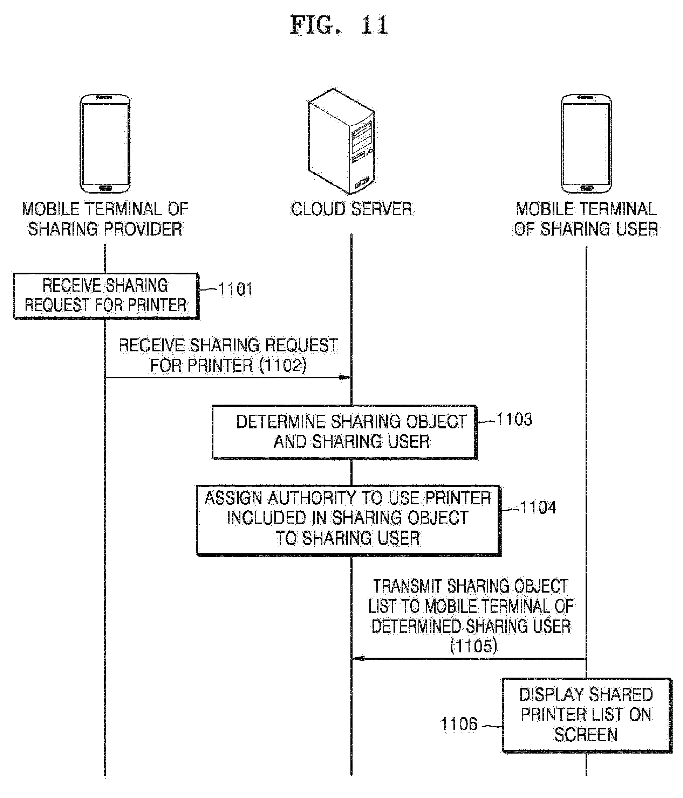

FIG. 11 is a diagram showing a process of setting the sharing of an image forming apparatus according to an embodiment.

Referring to FIG. 11, when a mobile terminal receives a sharing request for a printer from a sharing provider in operation 1101, the mobile terminal transmits the sharing request for the printer to a cloud server in operation 1102.

In operation 1103, the cloud server determines the sharing object and the sharing user on the basis of information received from the mobile terminal. In operation 1104, the cloud server assigns the authority to use a printer included in the sharing object to the sharing user. For example, the cloud server may store a corresponding relationship between the sharing object and the sharing user in an internal memory in the form of a table.

When the cloud server transmits a list of printers included in the sharing object to the mobile terminal of the determined sharing user in operation 1105, the mobile terminal of the sharing user displays the received list of printers to be shared on a screen of the mobile terminal in operation 1106.

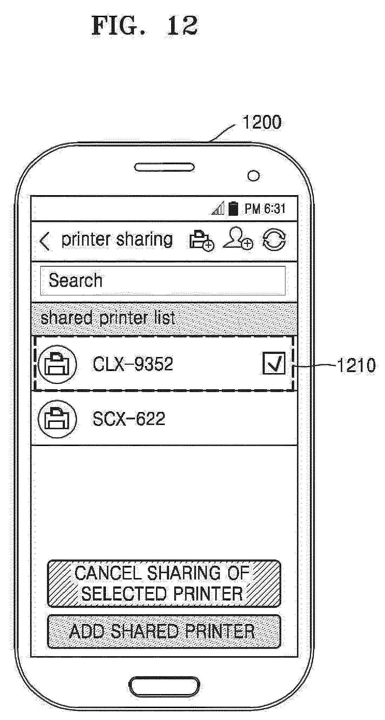

FIG. 12 is a diagram showing a UI screen displayed in a mobile terminal while the sharing of an image forming apparatus is cancelled according to an embodiment. However, the UI screen shown in FIG. 12 is merely an example of a UI screen needed to cancel the sharing of the image forming apparatus. Accordingly, it would be obvious to those skilled in the art that the UI screens may also be configured in various other forms.

Referring to FIG. 12, a list of printers currently being shared with another user is displayed on a UI screen 1200 of a mobile terminal of a sharing provider. The sharing provider may select a printer 1210 from among the printers included in the list and may select "Cancel sharing of selected printer" to request that the sharing of the selected printer be cancelled. In this case, the mobile terminal transmits a sharing cancellation request for the selected printer to a cloud print server. The sharing provider may also further add a shared printer by selecting "Add shared printer." When the sharing of the printer is cancelled by a request of the sharing provider, a cloud server transmits a list of printers of which the sharing is cancelled, and thus the printers of which the sharing is cancelled are no longer displayed in the mobile terminal of the sharing user.

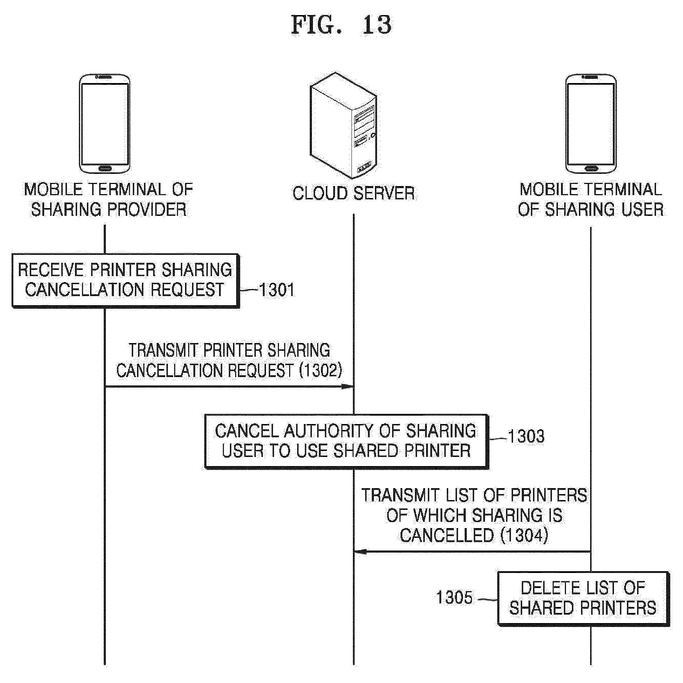

FIG. 13 is a diagram showing a process of cancelling the sharing of an image forming apparatus according to an embodiment.

Referring to FIG. 13, when a mobile terminal receives a sharing cancellation request for a printer from a sharing provider in operation 1301, the mobile terminal transmits the sharing cancellation request for the printer to a cloud server in operation 1302.

In operation 1303, the cloud server cancels the authority of a sharing user to use a shared printer according to the received sharing cancellation request. In operation 1304, the cloud server transmits a list of printers of which the sharing is cancelled to the mobile terminal of the sharing user.

In operation 1305, the mobile terminal of the sharing user deletes the list of the printers of which the sharing is cancelled from a shared printer list displayed on a screen of the mobile terminal.

Thus, it is possible to simply share the image forming apparatus registered in the cloud printing service with another user by selecting a sharing object and a sharing user in the mobile terminal and requesting the sharing or the cancellation of the sharing of the selected sharing object and sharing user.

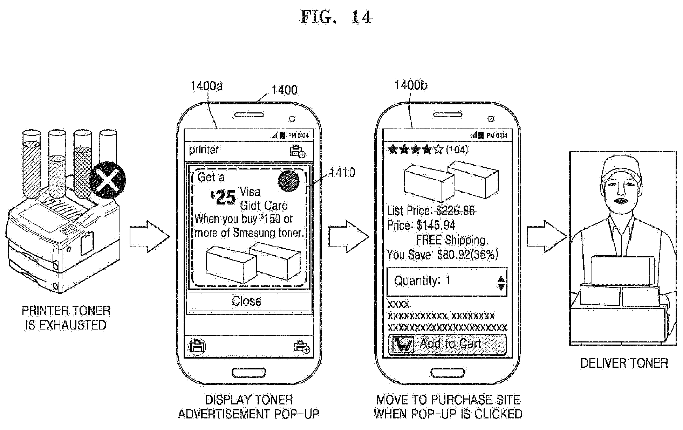

A method of providing an advertisement using an infrastructure of a server that provides a cloud printing service will be described below with reference to FIGS. 14 to 19.

FIG. 14 is a diagram showing an example of automatically providing a toner advertisement when printer toner is exhausted according to an embodiment.

Referring to FIG. 14, when toner of a printer is exhausted, a toner advertisement 1410 is displayed in the form of a pop-up on a first UI screen 1400a of a mobile terminal 1400 corresponding to the printer and registered in a cloud printing service. When a user clicks the toner advertisement 1410, the user is connected to a website for purchasing toner, and then a second UI screen 1400b is displayed. The user may order the toner through the second UI screen 1400b.

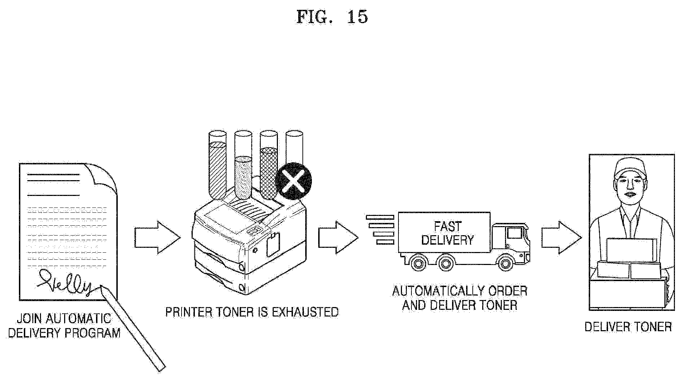

FIG. 15 is a diagram showing an example of automatically ordering toner according to an automatic delivery program when printer toner is exhausted according to an embodiment.

Referring to FIG. 15, when a user has joined an automatic toner ordering program, and a printer senses the exhaustion of toner, toner is automatically ordered without any ordering process.

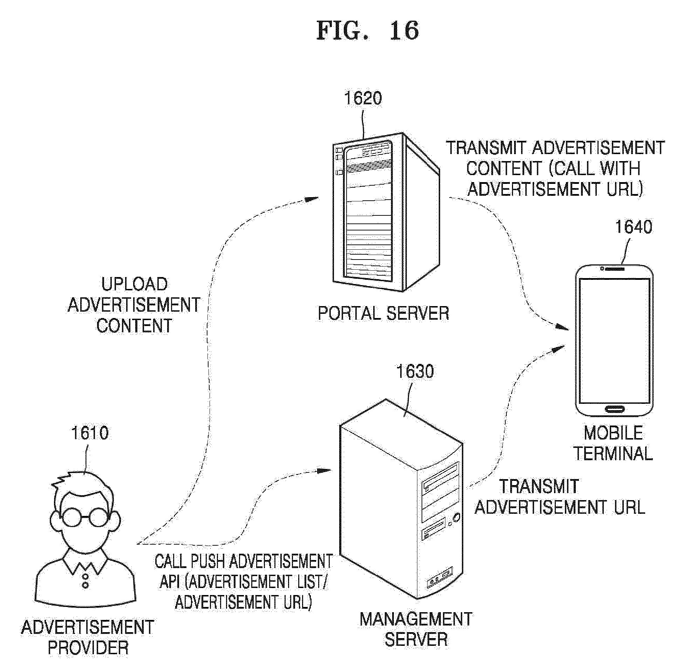

Detailed processes of providing an advertisement about toner and automatically ordering toner will be described below with reference to FIGS. 16 to 19.

FIG. 16 is a diagram for describing a method of providing an advertisement using a server infrastructure of a cloud printing service according to an embodiment.

Referring to FIG. 16, an advertisement provider 1610 may provide an advertisement to users of a cloud printing service using a portal server 1620 and a management server 1630 that are used to provide the cloud printing service. In detail, the advertisement provider 1610 may upload advertisement content to the portal server 1620, and the management server 1630 may call a push advertisement API and store an advertisement list and an advertisement URL.

When an event for providing an advertisement occurs, the management server 1630 transmits the advertisement URL to the mobile terminal 1640. The mobile terminal 1640 obtains the advertisement content from the portal server 1620 using the received advertisement URL and displays the obtained advertisement content on a screen of the mobile terminal 1640.

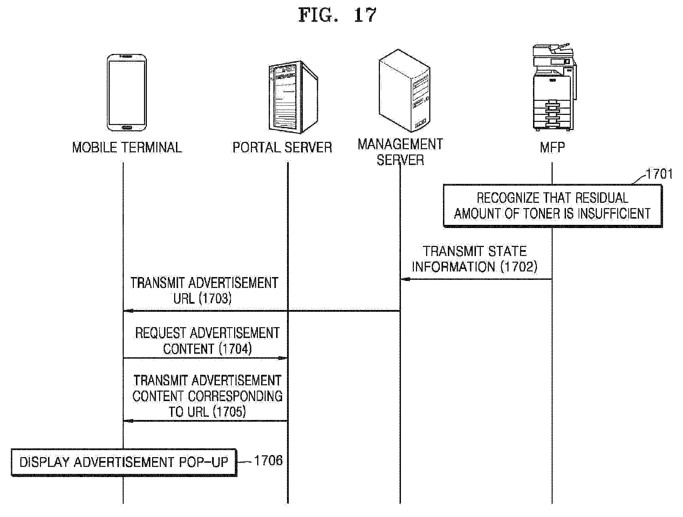

FIG. 17 is a diagram showing a process of providing a toner advertisement when printer toner is exhausted according to an embodiment.

Referring to FIG. 17, a multi-function product (MFP), that is, an image forming apparatus, recognizes that the residual amount of toner is insufficient in operation 1701 and transmits state information indicating that the residual amount of toner is insufficient to a management server in operation 1702.

Since the management server receives the state information indicating that the residual amount of toner is insufficient, that is, an event for providing a toner advertisement occurs, the image forming apparatus transmits an advertisement URL to a mobile terminal in operation 1703. In this case, the transmitted advertisement URL may be stored by the advertisement provider calling an API for a push advertisement in advance.

In operation 1704, the mobile terminal uses the received advertisement URL to request advertisement content from a portal server. In operation 1705, the portal server transmits the advertisement content corresponding to the advertisement URL to the mobile terminal. In operation 1706, the mobile terminal displays the received advertisement content on a screen of the mobile terminal.

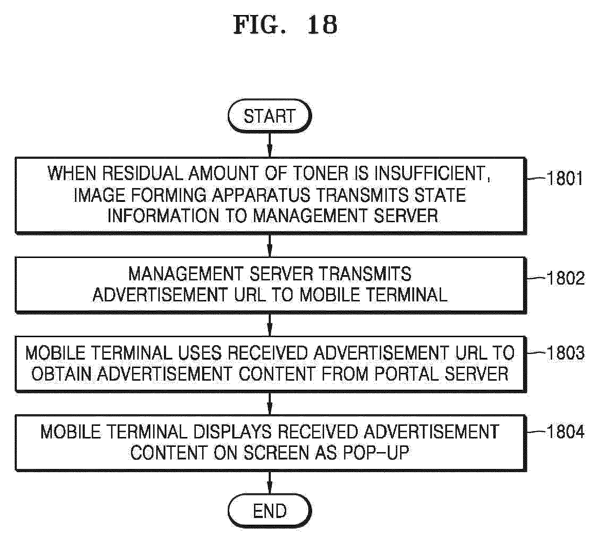

FIG. 18 is a flowchart for describing a method of providing a toner advertisement when printer toner is exhausted according to an embodiment.

Referring to FIG. 18, when the image forming apparatus recognizes that the residual amount of toner is insufficient in operation 1801, the image forming apparatus transmits state information indicating that the residual amount of toner is insufficient to a management server. In operation 1802, the management server transmits an advertisement URL to the mobile terminal. In operation 1803, the mobile terminal uses the received advertisement URL to obtain advertisement content from a portal server. In operation 1804, the mobile terminal displays the received advertisement content on a screen of the mobile terminal in the form of a pop-up.

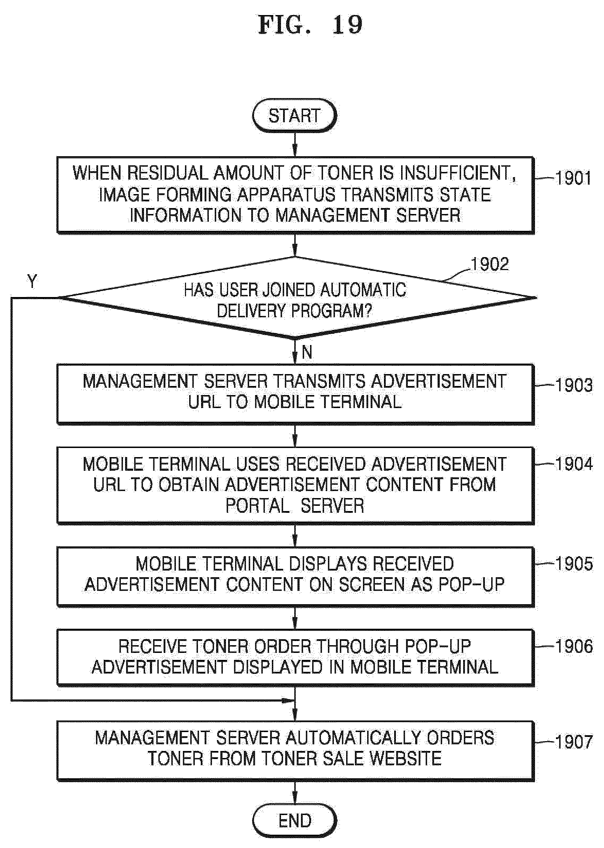

FIG. 19 is a flowchart for describing a method of providing a toner advertisement or automatically ordering toner when printer toner is exhausted according to an embodiment.

Referring to FIG. 19, when the image forming apparatus recognizes that the residual amount of toner is insufficient in operation 1901, the image forming apparatus transmits state information indicating that the residual amount of toner is insufficient to a management server. In operation 1902, the management server checks whether a user of the image forming apparatus has joined an automatic ordering program. When it is determined that the user has joined the automatic ordering program, the processing proceeds to operation 1907, and the management server automatically orders toner from a toner sale website. However, when it is determined that the user has not joined the automatic ordering program, the processing proceeds to operation 1903.

In operation 1903, the management server transmits an advertisement URL to the mobile terminal. In operation 1904, the mobile terminal uses the received advertisement URL to obtain advertisement content from a portal server. In operation 1905, the mobile terminal displays the received advertisement content on a screen of the mobile terminal in the form of a pop-up. When a toner order is received through the pop-up advertisement displayed on the screen of the mobile terminal in operation 1906, the management server orders toner from the toner sale website in operation 1907.

The advertisement provider may use a server infrastructure used in a cloud printing service to provide various advertisements to a member of the cloud printing service, thus efficiently utilizing resources.

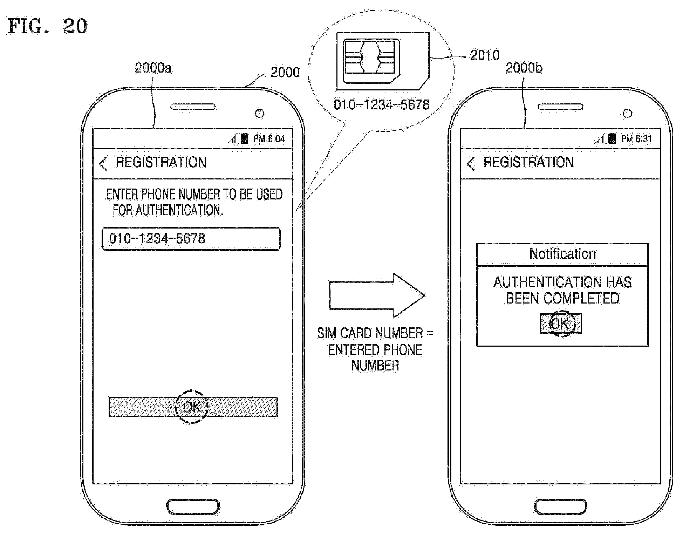

A method of performing authentication needed to register an image forming apparatus in a cloud printing service will be described below with reference to FIGS. 20 to 28.

As described above with reference to FIGS. 6A to 6E, in order to utilize a cloud printing service, an image forming apparatus may be registered in a cloud server such that the image forming apparatus corresponds to a phone number of a mobile terminal. In this case, in order to register the image forming apparatus such that the image forming apparatus corresponds to the phone number of the mobile terminal, the reliability of the phone number of the mobile terminal needs to be verified in advance. Accordingly, an authentication process of checking whether a phone number requested to be registered by the user matches the actual phone number of the mobile terminal of the user is performed. In the following embodiment, the authentication is performed in a different method depending on whether a phone number registered in a subscriber identification module (SIM) installed in the mobile terminal matches a phone number entered by the user.

FIGS. 20 to 22 are diagrams showing UI screens displayed on a screen of a mobile terminal in a phone number authentication process when an image forming apparatus is registered in a cloud server according to an embodiment.

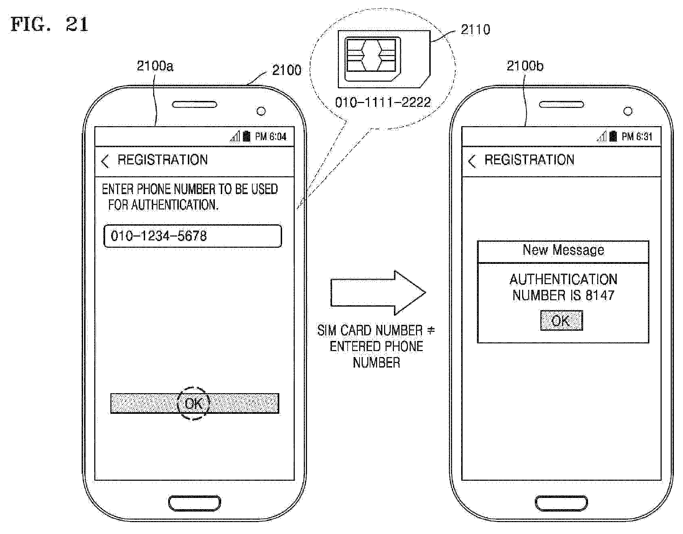

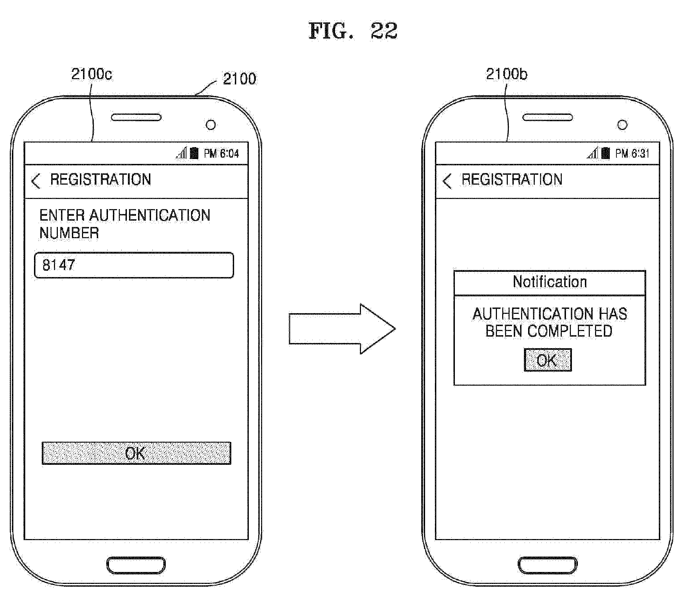

In detail, FIG. 20 shows UI screens displayed through an authentication process when a phone number registered in a SIM card of a mobile terminal matches a phone number entered by a user, and FIGS. 21 and 22 show UI screens displayed through an authentication process when a phone number registered in a SIM card of a mobile terminal does not match a phone number entered by a user.

Referring to FIG. 20, a phone number registered in a SIM card 2010 installed in a mobile terminal 2000 is 010-1234-5678. That is, an actual phone number used by the mobile terminal 2000 is 010-1234-5678, which is registered in the SIM card 2010.

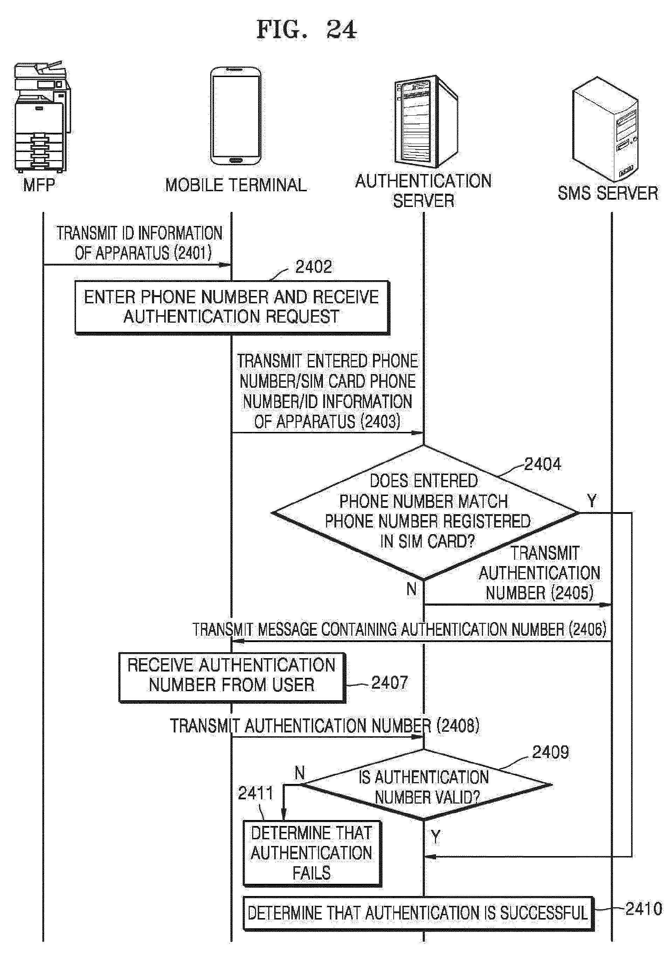

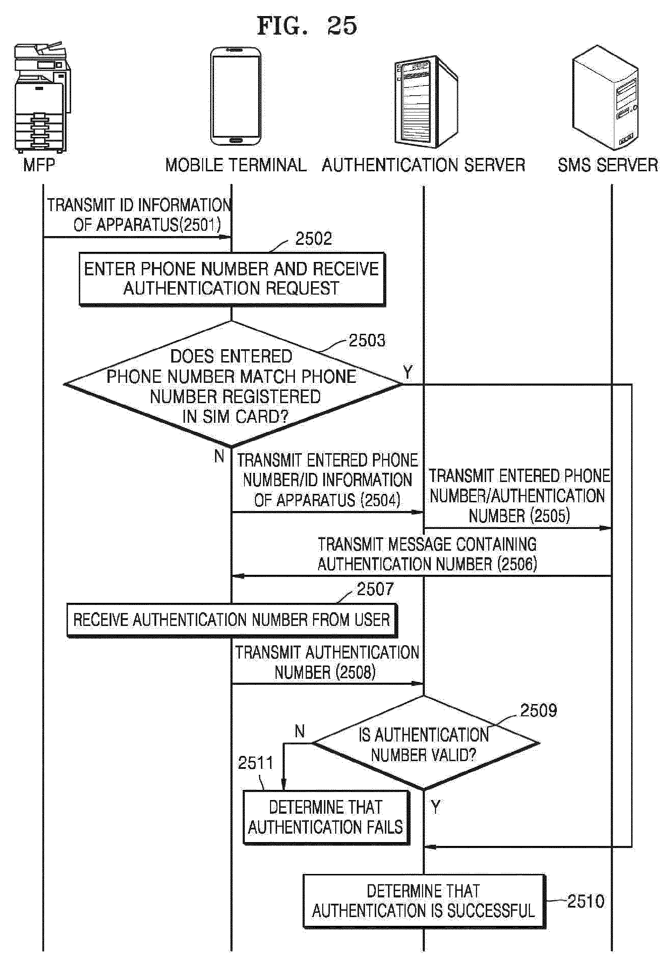

When a user enters 010-1234-5678 on a first UI screen 2000a as a phone number to be used for authentication and then presses an "OK" button, the authentication is directly completed without an additional procedure, and then a pop-up indicating that the authentication has been completed is displayed as shown on the second UI screen 2000b because the phone number entered by the user matches the phone number registered in the SIM card. In this case, the determination of whether the phone number entered by the user matches the phone number registered in the SIM card may be performed by a mobile app running on the mobile terminal 2000 or an authentication server for performing the authentication. A detailed process in each case will be described below with reference to FIGS. 24 and 25.

Referring to FIG. 21, a phone number registered in a SIM card 2110 installed in a mobile terminal 2100 is 010-1111-2222. That is, an actual phone number used by the mobile terminal 2100 is 010-1111-2222, which is registered in the SIM card 2110.

When a user enters 010-1111-2222 on a first UI screen 2100a as a phone number to be used for authentication and then presses an "OK" button, the mobile terminal 2100 receives an authentication number for the authentication because the phone number entered by the user does not match the phone number registered in the SIM card. Accordingly, as shown on the second UI screen 2100b, a pop-up for informing that a message containing the authentication number is received is displayed.

When the user presses an "OK" button on the second UI screen 2100b, a screen that requires the authentication number to be entered is displayed as shown on the third UI screen 2100c of FIG. 22 in the mobile terminal 2100. When the user enters the received authentication number "8147" on the third UI screen 2100c and then presses an "OK" button, a pop-up indicating that the authentication has been completed is displayed as shown on the fourth UI screen 2100d. Also, the determination of whether the phone number entered by the user matches the phone number registered in the SIM card may be performed by a mobile app that runs on the mobile terminal 2000 or an authentication server that performs the authentication. A detailed process in each case will be described below with reference to FIGS. 24 and 25.

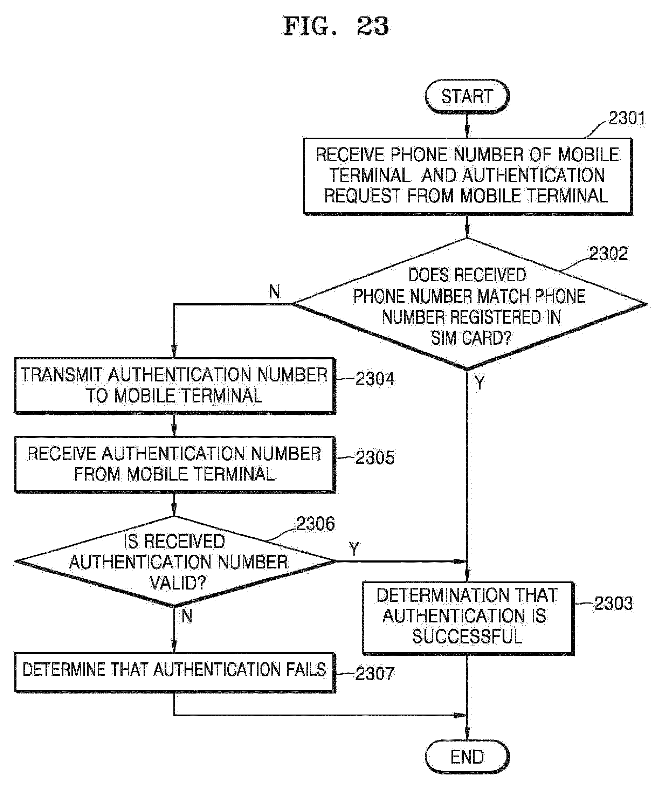

FIG. 23 is a flowchart for describing a phone number authentication method performed when an image forming apparatus is registered in a cloud server according to an embodiment.

Referring to FIG. 23, in operation 2301, an authentication server receives a phone number of a mobile terminal and an authentication request from the mobile terminal. In operation 2302, the determination of whether a phone number entered by a user on the mobile terminal matches a phone number registered in a SIM card installed in the mobile terminal is performed. When a result of the determination is that the phone numbers match each other, the processing proceeds to operation 2303. On the other hand, when the determination result is that the phone numbers do not match each other, the processing proceeds to operation 2304.

In operation 2304, when an authentication server transmits an authentication number to a short message service (SMS) server, the SMS server transmits a message containing the authentication number to the mobile terminal. The mobile terminal displays the received message containing the authentication number on a screen of the mobile terminal.

When the user looks at the authentication number and then enters the authentication number on the mobile terminal, the authentication server receives the authentication number entered by the user from the mobile terminal. The authentication server determines whether the received authentication number is valid, that is, whether the authentication number transmitted to the mobile terminal in operation 2304 matches the authentication number received from the mobile terminal in operation 2305. When a result of the determination is that the authentication numbers match each other, the processing proceeds to operation 2303, and the authentication server determines that the authentication is successful. On the other hand, when the determination result is that the authentication numbers do not match each other, the processing proceeds to operation 2307, and the authentication server determines that the authentication fails.

FIGS. 24 and 25 are diagrams showing a process of performing authentication when an image forming apparatus is registered in a cloud server according to an embodiment. In detail, FIG. 24 shows that an authentication server determines whether an entered phone number matches a phone number registered in a SIM card while FIG. 25 shows that a mobile terminal performs the same determination.

Referring to FIG. 24, an MFP, that is, an image forming apparatus, transmits ID information of the image forming apparatus to a mobile terminal in operation 2401. In operation 2402, the mobile terminal receives a phone number and an authentication request from a user.

In operation 2403, the mobile terminal transmits the phone number entered by the user, the phone number registered in the SIM card installed in the mobile terminal, and the ID information of the image forming apparatus to an authentication server.

In operation 2402, the authentication server determines whether the entered phone number matches the phone number registered in the SIM card. When a result of the determination is that the phone numbers match each other, the processing proceeds to operation 2410, and the authentication server determines that the authentication is successful. On the other hand, when the determination result is that the phone numbers do not match each other, the process proceeds to operation 2405, and the authentication server transmits an authentication number to an SMS server.

In operation 2406, the SMS server transmits a message containing the authentication number received from the authentication server to the mobile terminal. The mobile terminal displays the received message on a screen of the mobile terminal.

In operation 2407, the mobile terminal receives the authentication number from the user. In operation 2408, the mobile terminal transmits the received authentication number to the authentication server.

In operation 2409, the authentication server determines whether the received authentication number is valid. When a result of the determination is that the received authentication number is valid, the processing proceeds to operation 2410, and the authentication server determines that the authentication is successful. On the other hand, when the determination result is that the received authentication number is invalid, the processing proceeds to operation 2411, and the authentication server determines that the authentication fails.

Referring to FIG. 25, an MFP, that is, an image forming apparatus, transmits ID information of the image forming apparatus to a mobile terminal in operation 2501. In operation 2502, the mobile terminal receives a phone number and an authentication request from a user.

In operation 2503, the mobile terminal determines whether the entered phone number matches a phone number registered in the SIM card. When a result of the determination is that the phone numbers match each other, the processing proceeds to operation 2510, and the authentication server determines that the authentication is successful. On the other hand, when the phone numbers do not match each other, the processing proceeds to operation 2504, and the mobile terminal transmits the entered phone number and the ID information of the image forming apparatus to an authentication server.

In operation 2505, the authentication server transmits an authentication number to an SMS server in addition to the phone number received from the mobile terminal. In operation 2406, the SMS server transmits a message containing the authentication number received from the authentication server to the phone number received from the authentication server. The mobile terminal displays the received message on a screen of the mobile terminal.

In operation 2507, the mobile terminal receives the authentication number from the user. In operation 2508, the mobile terminal transmits the received authentication number to the authentication server.

In operation 2509, the authentication server determines whether the received authentication number is valid. When a result of the determination is that the received authentication number is valid, the processing proceeds to operation 2510, and the authentication server determines that the authentication is successful. On the other hand, when the determination result is that the received authentication number is invalid, the processing proceeds to operation 2511, and the authentication server determines that the authentication fails.

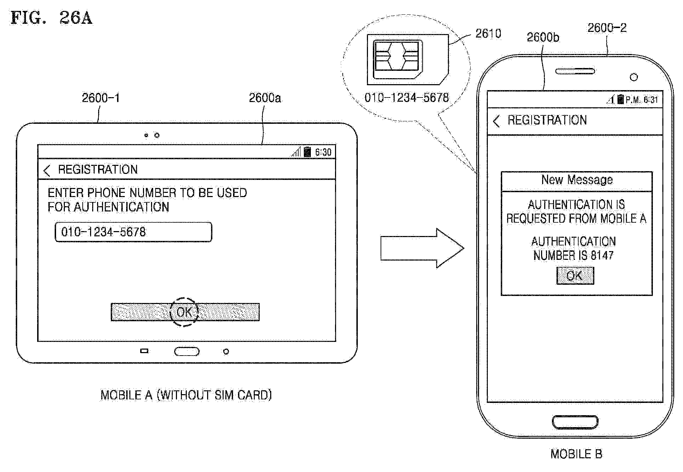

An example in which authentication is performed on a mobile terminal with no SIM card will be described below with reference to FIG. 26A to FIG. 28.

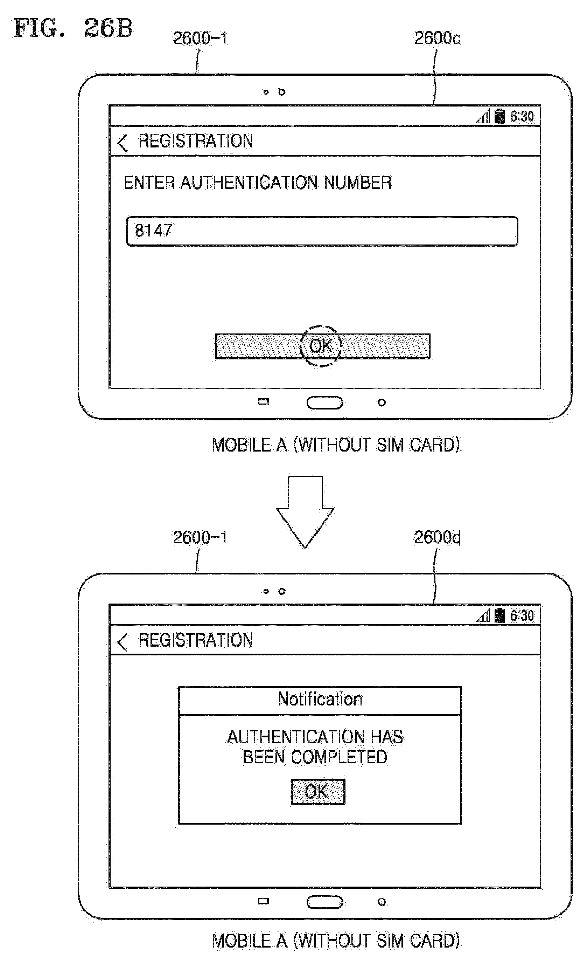

FIGS. 26A and 26B are diagrams showing UI screens that are displayed in an authentication process performed when a mobile terminal equipped with no SIM card is registered in a cloud printing service according to an embodiment.

Referring to FIG. 26A, the user owns mobile A 2600-1 equipped with no SIM card and mobile B 2600-2 equipped with a SIM card, and a phone number registered in a SIM card 2610 installed in the mobile B 2600-2 is "010-1234-5678."

In order to perform authentication on mobile A 2600-1 equipped with no SIM card, the user enters a phone number "010-1234-5678" of the user's other mobile terminal (i.e., mobile B) equipped with a SIM card on the first UI screen 2600a, and presses an "OK" button to request the authentication.

Since the user enters the phone number of mobile B 2600-2 through mobile A 2600-1 and requests the authentication, mobile B 2600-2 receives an authentication number. Referring to the second UI screen 2600b, there is an authentication request from mobile A, and a message indicating that the authentication number is "8147" is displayed in the form of a pop-up.

Referring to FIG. 26B, when the user enters the authentication number received through mobile B 2600-2 on the third UI screen 2600c of mobile A 2600-1 and then presses an "OK" button, a pop-up indicating that the authentication has been completed is displayed as shown on the fourth UI screen 2600d.

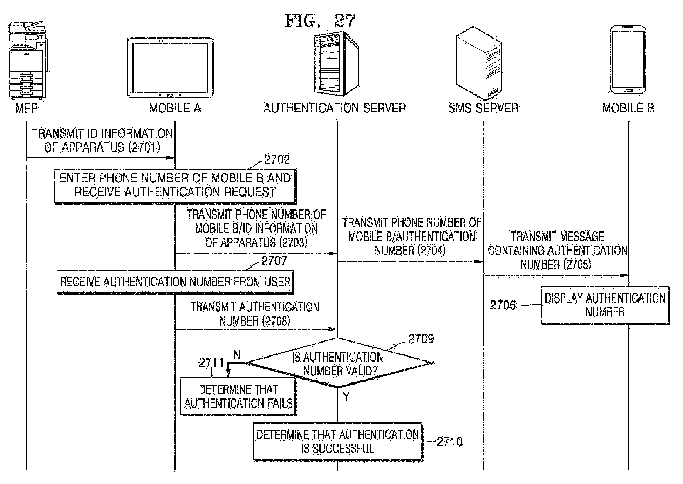

FIG. 27 is a diagram showing an authentication process performed when a mobile terminal equipped with no SIM card is registered in a cloud printing service according to an embodiment.

Referring to FIG. 27, an MFP, that is, an image forming apparatus, transmits ID information of the image forming apparatus to mobile A in operation 2701. In operation 2702, the user enters a phone number of mobile B through mobile A and requests authentication. In this case, it is assumed that mobile A is not equipped with a SIM card while mobile B is equipped with a SIM card.

In operation 2703, mobile A transmits, to an authentication server, the phone number of mobile B and the ID information of the image forming apparatus which are entered by the user. In operation 2704, the authentication server transmits the phone number of mobile B and an authentication number to an SMS server.

In operation 2705, the SMS server transmits a message containing the received authentication number to mobile B. In operation 2706, mobile B displays the received authentication number on a screen of mobile B. Accordingly, the user may check the authentication number needed for the authentication from the screen of mobile B.

The user who checks the authentication number from mobile B enters the authentication number on mobile A in operation 2707. In operation 2708, mobile A transmits the received authentication number to the authentication server. In operation 2709, the authentication server determines whether the received authentication number is valid. When a result of the determination is that the received authentication number is valid, the processing proceeds to operation 2710, and the authentication server determines that the authentication is successful. On the other hand, when the determination result is that the received authentication number is invalid, the processing proceeds to operation 2711, and the authentication server determines that the authentication fails.

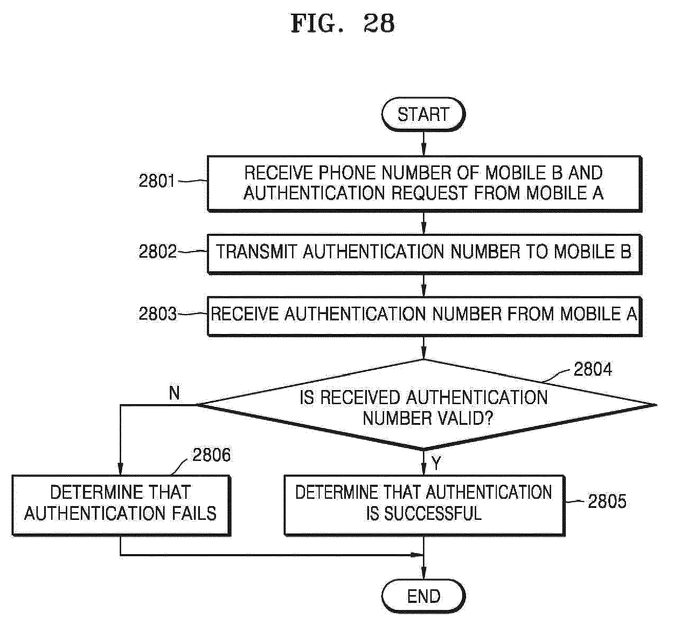

FIG. 28 is a flowchart for describing an authentication process performed when a mobile terminal equipped with no SIM card is registered in a cloud printing service according to an embodiment.

Referring to FIG. 28, in operation 2801, an authentication server receives a phone number of mobile B and an authentication request from mobile A. In operation 2802, the authentication server requests an SMS server to transmit an authentication number to mobile B. In operation 2803, the authentication server receives the authentication number entered by the user on mobile A from mobile A. In operation 2804, the authentication server determines whether the received authentication number is valid. When a result of the determination is that the received authentication number is valid, the processing proceeds to operation 2805, and the authentication server determines that the authentication is successful. On the other hand, when the determination result is that the received authentication number is invalid, the processing proceeds to operation 2806, and the authentication server determines that the authentication fails.

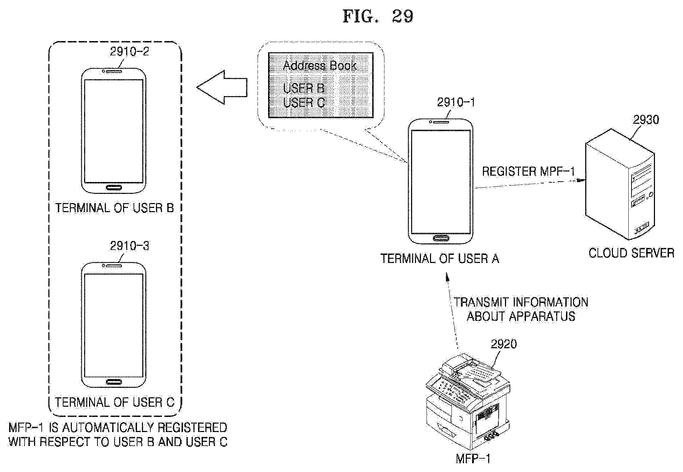

A method of registering an image forming apparatus in a cloud printing service on behalf of another user according to an embodiment will be described below with reference to FIGS. 29 to 31.

FIG. 29 is a diagram for describing a method of registering an image forming apparatus in a cloud printing service on behalf of another user according to an embodiment.

Referring to FIG. 29, when user A registers an image forming apparatus MFP-1 in a cloud server 2930 such that the image forming apparatus MFP-1 corresponds to a phone number of a terminal 2910-1 of user A, the image forming apparatus MFP-1 is also registered in the cloud server 2930 with respect to mobile terminals 2910-2 and 2910-3 of user B and user C registered in a contact book of the mobile terminal 2910-1 of user A.

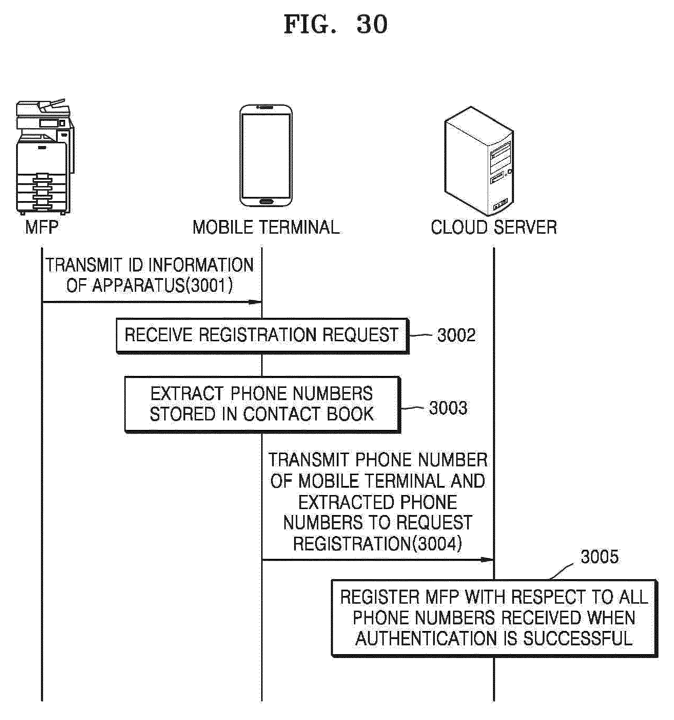

FIG. 30 is a diagram showing a process of registering an image forming apparatus in a cloud printing service on behalf of another user according to an embodiment.

Referring to FIG. 30, an MFP, that is, an image forming apparatus, transmits ID information of the image forming apparatus to a mobile terminal in operation 3001. In operation 3002, the mobile terminal receives a registration request for an image forming apparatus from a user. In operation 3003, the mobile terminal extracts phone numbers stored in a contact book of the mobile terminal. In this case, the mobile terminal may extract all phone numbers stored therein or may extract only phone numbers selected by the user.

In operation 3004, the mobile terminal transmits the phone numbers extracted in operation 3003 to a cloud server in addition to the phone number of the mobile terminal.

In operation 3005, the cloud server performs authentication needed to register the image forming apparatus, and registers the image forming apparatus with respect to all of the received phone numbers when the authentication is successful.

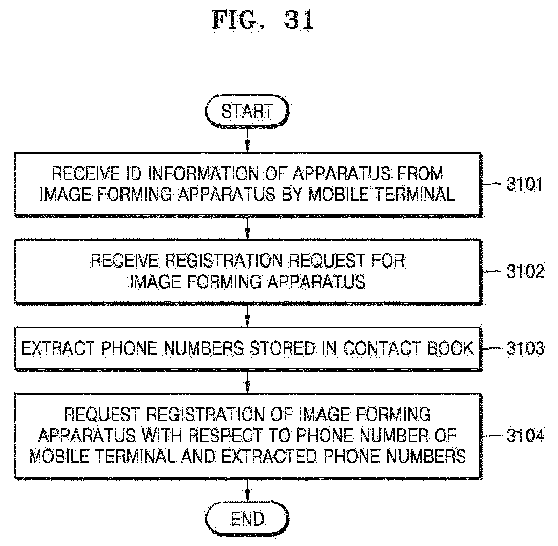

FIG. 31 is a flowchart for describing a method of registering an image forming apparatus in a cloud printing service on behalf of another user according to an embodiment.

Referring to FIG. 31, a mobile terminal receives ID information of an image forming apparatus from the image forming apparatus in operation 3101. In operation 3102, the mobile terminal receives a registration request for an image forming apparatus from a user. In operation 3103, the mobile terminal extracts phone numbers stored in a contact book of the mobile terminal. In operation 3104, the mobile terminal requests an authentication server to register the image forming apparatus with respect to the phone number of the mobile terminal and the phone numbers extracted from the contact book.

This disclosure has been particularly shown and described with reference to exemplary embodiments thereof. It will be understood by those skilled in the art that various changes in form and details may be made therein without departing from the scope of the disclosure as defined by the appended claims. The exemplary embodiments should be considered in a descriptive sense only and not for purposes of limitation. Therefore, the scope of embodiments is defined not by the detailed description of embodiments but by the appended claims, and all differences within the scope will be construed as being included in the inventive concept.

The embodiments can be written as computer programs and can be implemented in general-use digital computers that execute the programs using a computer-readable recording medium. Examples of the computer-readable recording medium include magnetic storage media such as a ROM, a floppy disk, a hard disk, etc., optical recording media such as CD-ROMs, or DVDs, and storage media such as carrier waves (e.g., data transmission through the Internet).

## Claims

1. A method comprising:
by at least one server:
receiving a sharing request from a mobile device, the sharing request indicating that a user of the mobile device requests to share at least one image forming apparatus that the user of the mobile device is authorized to use through the at least one server with at least one sharing user;
determining, in accordance with the received sharing request, the at least one image forming apparatus;
determining, in accordance with the received sharing request, the at least one sharing user;
authorizing the determined at least one sharing user to use the determined at least one image forming apparatus through the at least one server; and
transmitting information indicating the determined at least one image forming apparatus to at least one mobile device of the determined at least one sharing user, respectively.

2. The method of claim 1, wherein the authorizing comprises:
storing, in a memory of the at least one server, a correspondence of the determined at least one sharing user to the determined at least one image forming apparatus.

3. The method of claim 1 or 2, wherein the determining the at least one sharing user comprises:
determining, as the at least one sharing user, at least one user of users registered as friends of the user of the mobile terminal from which the sharing request was received.

4. The method of any one of claims 1 to 3, wherein the sharing request includes information for determining the at least one image forming apparatus and the at least one sharing user.

5. The method of any one of claims 1 to 4, wherein
the determined at least one sharing user includes at least two sharing users,
the determined at least one image forming apparatus includes at least two image forming apparatuses, and
the determining the at least one image forming apparatus determines each of the at least two image forming apparatuses differently for each of the at least two sharing users.

6. The method of any one of claims 1 to 5, wherein the transmitted information is transmitted for display on at least one screen of the at least one mobile device of the determined at least one sharing user, respectively, and includes information for identifying the user of the mobile terminal from which the sharing request was received.

7. The method of any one of claims 1 to 6, further comprising:
by the at least one server:
receiving, from the user of mobile terminal from which the sharing request was received, a sharing cancellation request indicating that sharing of at least one image forming apparatus of the determined at least one image forming apparatus is to be canceled for at least one sharing user of the determined at least one sharing user;
determining, based on the sharing cancellation request, the at least one sharing user of the determined at least one sharing user for which the sharing is to be canceled; and
transmitting to the at least one mobile device of the determined at least one sharing user for which the sharing is to be cancelled, respectively, information indicating that sharing of the at least one image forming apparatus of the determined at least one image forming apparatus is to be canceled.

8. A non-transitory computer-readable recording medium having recorded thereon a computer program for executing the method of any one of claims 1 to 7.

9. At least one server comprising:
at least one memory storing computer-readable instructions; and
at least one processor that executes the instructions to cause the following to be performed:
receiving a sharing request from a mobile device, the sharing request indicating that a user of the mobile device requests to share at least one image forming apparatus that the user of the mobile device is authorized to use through the at least one server with at least one sharing user,
determining, in accordance with the received sharing request, the at least one image forming apparatus,
determining, in accordance with the received sharing request, the at least one sharing user,
authorizing the determined at least one sharing user to use the determined at least one image forming apparatus through the at least one server, and
transmitting information indicating the determined at least one image forming apparatus to at least one mobile device of the determined at least one sharing user, respectively.

10. The at least one server of claim 9, wherein the authorizing comprises:
storing, in the at least one server, a correspondence of the determined at least one sharing user to the determined at least one image forming apparatus.

11. The at least one server of claim 9 or 10, wherein the determining of the at least one sharing user comprises:
determining, as the at least one sharing user, at least one user of users registered as friends of the user of the mobile terminal from which the sharing request was received.

12. The at least one server of any one of claims 9 to 11, wherein the sharing request includes information for determining the at least one image forming apparatus and the at least one sharing user.

13. The at least one server of any one of claims 9 to 12, wherein
the determined at least one sharing user includes at least two sharing users,
the determined at least one image forming apparatus includes at least two image forming apparatuses, and
the determining the at least one image forming apparatus determines each of the at least two image forming apparatuses differently for each of the at least two sharing users.

14. The at least one server of any one of claims 9 to 13, wherein the transmitted information is transmitted for display on at least one screen of the at least one mobile device of the determined at least one sharing user, respectively, and includes information for identifying the user of the mobile terminal from which the sharing request was received.

15. The at least one server of any one of claims 9 to 14, wherein the at least one processor executes the instructions to cause the following to further be performed:
receiving, from the user of mobile terminal from which the sharing request was received, a sharing cancellation request indicating that sharing of at least one image forming apparatus of the determined at least one image forming apparatus is to be cancelled for at least one sharing user of the determined at least one sharing user;
determining, based on the sharing cancellation request, the at least one sharing user of the determined at least one sharing user for which the sharing is to be canceled; and
transmitting to the at least one mobile device of the determined at least one sharing user for which the sharing is to be canceled, respectively, information indicating that sharing of the at least one image forming apparatus of the determined at least one image forming apparatus is to be cancelled.
